# EUROPEAN PATENT APPLICATION

(11) **EP 4 668 419 A1**
(43) Date of publication of application: **24.12.2025**
(21) Application number: 23959706.5
(22) Date of filing: 28.11.2023
(51) Int. Cl.: H01M 50/103, H01M 50/342

(54) **BATTERY CELL, BATTERY AND ELECTRICAL APPARATUS**

(71) Applicant: Contemporary Amperex Technology Co., Limited, Ningde, Fujian 352100 (CN)
(72) Inventor: ZHENG, Donglai, Ningde, Fujian 352100 (CN); SHI, Dongyang, Ningde, Fujian 352100 (CN); MA, Hao, Ningde, Fujian 352100 (CN); LI, Chuan, Ningde, Fujian 352100 (CN); LI, Baiqing, Ningde, Fujian 352100 (CN)
(74) Representative: Kraus & Lederer PartGmbB
(86) International application number: PCT/CN2023/134617
(87) International publication number: WO 2025/111781

(57) **Abstract**

A battery cell (100), a battery (1000), and an electrical apparatus. The battery cell (100) comprises: an electrode assembly (20); and a casing (10), the casing (10) being used for accommodating the electrode assembly (20). The casing (10) is provided with a scoring groove (41) and a buffer groove (50), the scoring groove (41) defining a predetermined pressure relief area (401) which is opened when the battery cell (100) is subjected to pressure relief, and the buffer groove (50) being located on the side of the scoring groove (41) away from the geometric center of the predetermined pressure relief area (401).

## Description

### TECHNICAL FIELD

The present application relates to the technical field of batteries, and in particular, to a battery cell, a battery, and an electric device.

### BACKGROUND

Energy conservation and emission reduction are the key to sustainable development of the automobile industry. Electric vehicles have become an important part of the sustainable development of the automobile industry due to their energy-saving and environmental protection advantages. For electric vehicles, the battery technology is an important factor in their development.

In order to ensure the safety performance of the battery cell, a pressure relief part provided with a score groove is generally disposed on the battery cell. The pressure relief part is configured to release the pressure inside the battery cell when the battery cell satisfies a predetermined condition. During use of the battery cell in charging and discharging, the electrode assembly may undergo expansion and deformation, causing the housing accommodating the electrode assembly to bulge and deform as well, which in turn causes the rupture at the pressure relief part disposed on the housing, thus reducing the reliability of the battery cell.

### SUMMARY

In view of the above problems, the present application provides a battery cell, a battery, and an electric device, which can alleviate the problem of rupture at the score groove during use of the battery.

In a first aspect, the present application provides a battery cell, which includes: an electrode assembly; and a housing, where the housing is configured to accommodate the electrode assembly, and the housing is provided with a score groove and a buffer groove, the score groove defining a predetermined pressure relief zone opened when the battery cell is subjected to pressure relief, and the buffer groove being located on a side of the score groove distal to a geometric center of the predetermined pressure relief zone.

In the technical solutions of embodiments of the present application, by providing the buffer groove on the outer side of the score groove, the housing can be deformed at the buffer groove to some extent when the electrode assembly expands, such that the expansion force of the electrode assembly can be released at the buffer groove, and the acting force transmitted to the score groove is reduced. Therefore, the degree of deformation at the score groove is reduced, the probability of liquid leakage caused by tension-induced rupture at the score groove is reduced, the service life of the battery cell is prolonged, and the reliability of the battery cell is improved.

In some embodiments, the score groove and the buffer groove are located on a same side wall of the housing, and the buffer groove is disposed relative to an edge of the score groove proximal to the housing. In the above technical solutions, the expansion force of the electrode assembly exerts a tensile force on the first wall part, and by providing the buffer groove, the first wall part can have greater tensile deformation at the buffer groove. Therefore, the tensile deformation at the score groove is reduced, the probability of the liquid leakage of the housing caused by tension-induced rupture at the score groove is reduced, the service life of the battery cell is prolonged, and the reliability of the battery cell is improved.

In some embodiments, the housing includes a pressure relief part, the pressure relief part being disposed separately from a wall part of the housing, and the pressure relief part being provided with the score groove; the buffer groove is disposed on the pressure relief part and located on the side of the score groove distal to the geometric center of the predetermined pressure relief zone, and a thickness of the pressure relief part at the buffer groove is greater than a thickness of the pressure relief part at the score groove. In the above technical solutions, the buffer grooves are directly disposed on the pressure relief part, the pressure relief part is a component independent of the wall part of the housing, and the pressure relief part can be manufactured separately and then assembled onto the wall part of the housing, resulting in low generation difficulty and high efficiency.

In some embodiments, the electrode assembly includes at least one positive electrode plate and at least one negative electrode plate, where the at least one positive electrode plate and the at least one negative electrode plate are stacked to form a straight zone, and at least a portion of the positive electrode plate and at least a portion of the negative electrode plate are disposed in a stacked manner in the straight zone in a first direction; the housing includes a first wall part, the first wall part being located on a side of the electrode assembly in a second direction, the second direction being a thickness direction of the first wall part and being perpendicular to the first direction, and the first wall part being provided with the score groove and the buffer groove. In the above technical solutions, the buffer grooves are located between the score groove and the outer edge of the first wall part. When the electrode assembly expands, the expansion force acts on the housing to exert a tensile force on the first wall part. By providing the buffer grooves, the first wall part can have greater tensile deformation at the buffer groove. Thus, the tensile deformation at the weakened zone is reduced, the probability of the liquid leakage caused by tension-induced rupture at the weakened zone is reduced, the service life of the battery cell is prolonged, and the reliability of the battery cell is improved.

In some embodiments, the buffer groove includes a first buffer groove part, the first buffer groove part being located on a side of the score groove in the first direction. In the above technical solutions, when the electrode assembly expands, a relatively large tensile force on the first wall part in the first direction can be released at the first buffer groove part to some extent, thereby effectively reducing the tensile force transmitted to the score groove, reducing the probability of tension-induced rupture at the score groove and thus reducing the risk of liquid leakage, prolonging the service life of the battery cell, and improving the reliability of the battery cell.

In some embodiments, a maximum width of the predetermined pressure relief zone in the first direction is W1, and a maximum groove width of the first buffer groove part in the first direction is W2, satisfying: 0.3 ≤ W2/W1 ≤ 1. In the above technical solutions, the area of the predetermined pressure relief zone can be enlarged to meet the gas discharge requirement and improve the timeliness of a burst of the pressure relief part; and meanwhile, the rigidity of the first wall part at the first buffer groove part is reduced, and when the electrode assembly expands, the first wall part is deformed to some extent at the first buffer groove part, such that the expansion force can be released to some extent. Therefore, the tensile deformation at the weakened zone is reduced, the probability of the liquid leakage caused by tension-induced rupture at the weakened zone is reduced, the service life of the battery cell is prolonged, and the reliability of the battery cell is improved.

In some embodiments, a maximum length of the predetermined pressure relief zone in a third direction is L1, and a maximum groove length of the first buffer groove part in the third direction is L2, satisfying: L2/L1 ≥ 1, and the third direction is perpendicular to the first direction and the second direction, separately. In the above technical solutions, the tensile force applied to the respective positions of the entire predetermined pressure relief zone is reduced to some extent, and the first buffer groove part can play a role in buffering the force applied to the weakened zone at the respective positions. Thus, the probability of the liquid leakage caused by tension-induced rupture at the weakened zone is reduced, the service life of the battery cell is prolonged, and the reliability of the battery cell is improved.

In some embodiments, a thickness of the straight zone in the first direction is WO, and a maximum groove width of the first buffer groove part in the first direction is W2, satisfying: 0.1 ≤ W2/WO ≤ 0.3. In the above technical solutions, on the basis of ensuring that the battery cell has an enough energy density, the area of the predetermined pressure relief zone can be enlarged to meet the gas discharge requirement and improve the timeliness of a burst of the pressure relief part; and meanwhile, the rigidity of the first wall part at the first buffer groove part is reduced, and when the electrode assembly expands, the first wall part is deformed to some extent at the first buffer groove part, such that the expansion force can be released to some extent, Therefore, the tensile deformation at the weakened zone is reduced, the probability of the liquid leakage caused by tension-induced rupture at the weakened zone is reduced, the service life of the battery cell is prolonged, and the reliability of the battery cell is improved.

In some embodiments, the buffer groove includes a second buffer groove part, the second buffer groove part being located on a side of the score groove in the third direction, and the third direction being perpendicular to the first direction and the second direction, separately. In the above technical solutions, when the electrode assembly expands, the first wall part is subjected to a certain tensile force in the third direction, and by providing the second buffer groove part, the tensile force can be released at the second buffer groove part to some extent. Therefore, the tensile force transmitted to the score groove can be reduced, the probability of tension-induced rupture at the score groove is reduced, and thus the risk of liquid leakage is reduced, the service life of the battery cell is prolonged, and the reliability of the battery cell is improved.

In some embodiments, the housing includes a pressure relief part, the pressure relief part being provided with the score groove, the pressure relief part being disposed separately from the first wall part, the pressure relief part being mounted on the first wall part, and the buffer groove being located in the first wall part. In the above technical solutions, the pressure relief part is a separate structural member. By providing the first wall part with the buffer groove, the first wall part can have greater tensile deformation at the buffer groove, thereby reducing the tensile deformation at the joint between the pressure relief part and the first wall part. The buffer groove can play a role in effectively buffering the joint between the pressure relief part and the first wall part, thus reducing the probability of liquid leakage caused by tension-induced rupture at the joint, and meanwhile, reducing the tensile deformation at the score groove, reducing the probability of liquid leakage of the housing caused by tension-induced rupture at the score groove, prolonging the service life of the battery cell, and improving the reliability of the battery cell.

In some embodiments, the pressure relief part has a length direction, a maximum dimension of the pressure relief part in the length direction is L0, at least a portion of the buffer groove extends in the length direction, and a maximum groove length of the buffer groove in the length direction is L2, where -30 mm ≤ L2-L0 ≤ 30 mm. In the above technical solutions, the buffer groove can play a role in effectively buffering the joint between the pressure relief part and the first wall part, reducing the probability of liquid leakage caused by tension-induced rupture at the joint, and meanwhile, avoiding transitional decrease in the structural strength of the first wall part to some extent, and reducing the probability of rupture at the first wall part during tests or use.

In some embodiments, a minimum distance between an edge of the buffer groove proximal to the pressure relief part and an edge of the pressure relief part is W, satisfying: 0.2 mm ≤ W ≤ 25 mm. In the above technical solutions, by limiting the W within the above range, the buffer groove plays a role in buffering the joint between the pressure relief part and the first wall part to some extent, thus reducing the probability of liquid leakage caused by tension-induced rupture at the joint.

In some embodiments, the score groove and the buffer groove are located on different side walls of the housing. In the above technical solutions, by disposing the score groove and the buffer groove on different side walls of the housing, the reduction in the strength of the wall part provided with the score groove can be avoided to some extent, and meanwhile, the buffer groove is disposed on another wall part to release a portion of the expansion stress, such that the force at the score groove can be buffered, which is beneficial to reducing the probability of liquid leakage caused by tension-induced rupture at the score groove, prolonging the service life of the battery cell, and improving the reliability of the battery cell.

In some embodiments, the electrode assembly includes at least one positive electrode plate and at least one negative electrode plate, where the at least one positive electrode plate and the at least one negative electrode plate are stacked to form a straight zone, and at least a portion of the positive electrode plate and at least a portion of the negative electrode plate are stacked in the straight zone in a first direction; the housing includes a first wall part and two second wall parts connected to the first wall part, where the two second wall parts are respectively located on two sides of the electrode assembly in the first direction, the first wall part is located on one side of the electrode assembly in a second direction, the second direction being a thickness direction of the first wall part and being perpendicular to the first direction, the first wall part is provided with the score groove, and the second wall part is provided with the buffer groove. In the above technical solutions, when the electrode assembly expands, the expansion force acts on the second wall parts and the first wall part, and the expansion stress is easily concentrated at the buffer groove of the second wall part, such that the second wall part is deformed at the buffer groove. Given a constant expansion force, the tensile force on the first wall part can be reduced, thus reducing the probability of liquid leakage caused by tension-induced rupture at the score groove of the first wall part, prolonging the service life of the battery cell, and improving the reliability of the battery cell.

In some embodiments, the buffer groove is located at an end of the second wall part proximal to the first wall part, the buffer groove is provided with an edge proximal to the first wall part, and a minimum distance between the edge and an inner wall surface of the first wall part is M, satisfying 0 ≤ M ≤ 5 mm, and preferably, 0 ≤ M ≤ 2 mm. In the above technical solutions, the buffer groove can play a role in buffering the weakened zone to some extent, thus reducing the probability of liquid leakage caused by tension-induced rupture at the weakened zone.

In some embodiments, a maximum groove width of the buffer groove in the second direction is N, satisfying 3 mm ≤ N ≤ 6 mm. In the above technical solutions, by limiting the maximum groove width N of the buffer groove within the above range, the buffer groove can play a role in effectively buffering the score groove, reducing the probability of liquid leakage caused by tension-induced rupture at the joint, and meanwhile, avoiding transitional decrease in the structural strength of the second wall part to some extent, and reducing the probability of rupture at the second wall part during tests or use.

In some embodiments, the buffer groove is located at an end of the second wall part proximal to the first wall part, the buffer groove is provided with an edge proximal to the first wall part, a minimum distance between the edge and an inner wall surface of the first wall part is M, and a maximum groove width of the buffer groove in the second direction is N, satisfying M = 0 and 5 mm ≤ N ≤ 6 mm. In the above technical solutions, the buffer groove can play a role in effectively buffering the score groove, reducing the probability of liquid leakage caused by tension-induced rupture at the score groove, and meanwhile, avoiding transitional decrease in the structural strength of the second wall part to some extent, and reducing the probability of rupture at the second wall part during tests or use.

In some embodiments, the buffer groove is located at an end of the second wall part proximal to the first wall part, the buffer groove is provided with an edge proximal to the first wall part, a minimum distance between the edge and an inner wall surface of the first wall part is M, and a maximum groove width of the buffer groove in the second direction is N, satisfying 0 < M ≤ 2 mm and 3 mm ≤ N ≤ 4 mm. In the above technical solutions, the buffer groove can play a role in effectively buffering the score groove, reducing the probability of liquid leakage caused by tension-induced rupture at the score groove, and meanwhile, avoiding transitional decrease in the structural strength of the second wall part to some extent, and reducing the probability of rupture at the second wall part during tests or use.

In some embodiments, the buffer groove extends in a third direction, and in the third direction, the buffer groove is disposed spaced apart from an edge of the second wall part, the third direction being perpendicular to the first direction and the second direction, separately. In the above technical solutions, the end part of the buffer groove can be prevented from extending to the adjacent wall part to some extent, which affects the strength of the joint between the second wall part and the adjacent wall part, such that the structural strength of the entire housing is improved while the buffer groove plays a role in buffering the score groove. This avoids the probability of the rupture of the housing during tests or use.

In some embodiments, a maximum length of the buffer groove in the third direction is less than a maximum length of the electrode assembly in the third direction. In the above technical solutions, the structural strength of the second wall part is improved while the buffer groove plays a role in buffering the score groove. This avoids the probability of the rupture at the second wall part during tests or use.

In some embodiments, the housing includes the plurality of wall parts and the pressure relief part, the pressure relief part being provided with the score groove, and at least one of the wall parts being provided with the buffer groove. In the above technical solutions, when the electrode assembly expands, the deformation of the housing is jointly borne by the pressure relief part and the wall parts of the housing, and the first wall part and the second wall parts can undergo a certain deformation at the buffer groove, thereby reducing the deformation of the pressure relief part. This reduces the risk of rupture at the pressure relief part, and improves the reliability of the battery cell.

In some embodiments, the buffer groove is disposed on an inner surface and/or an outer surface of the wall part. In the above technical solutions, a groove can be disposed on a single surface of the wall part of the housing to simplify the manufacturing process; alternatively, grooves can also be disposed on two surfaces of the wall part of the housing, such that the transitional decrease in the strength of the wall part of the housing can be avoided to some extent, and meanwhile, the buffering effect of the buffer groove on the score groove can be improved, the probability of liquid leakage caused by tension-induced rupture at the score groove of the pressure relief part is reduced, the service life of the battery cell is prolonged, and the reliability of the battery cell is improved.

In some embodiments, a maximum depth of the buffer groove is H1, and a thickness of the wall part of the housing provided with the score groove is H0, satisfying 25% < H1/HO ≤ 97.5%, further, 40% ≤ H1/HO ≤ 80%, and preferably, 50% ≤ H1/HO ≤ 70%. In the above technical solutions, by defining H1/HO, when the electrode assembly expands, the wall part of the housing can be deformed to some extent at the buffer groove, such that the expansion force can be released to some extent, thereby reducing the tensile deformation at the score groove of the pressure relief part. Therefore, the probability of liquid leakage caused by tension-induced rupture at the weakened zone is reduced, the service life of the battery cell is prolonged, and the reliability of the battery cell is improved.

In some embodiments, a thickness of the wall part of the housing provided with the score groove is H0, satisfying 0.4 mm ≤ H0 ≤ 2 mm. In the above technical solutions, the buffer groove can play a role in effectively buffering the score groove, reducing the probability of liquid leakage caused by tension-induced rupture at the score groove, and meanwhile, avoiding transitional decrease in the structural strength of the housing to some extent, and reducing the probability of rupture of the housing during tests or use.

In some embodiments, a minimum thickness of the housing at the buffer groove is H2, satisfying 0.05 mm ≤ H2 ≤ 1.5 mm. In the above technical solutions, by limiting H2, the housing has proper strength at the buffer groove, which can not only avoid the rupture of the housing in scenarios such as dropping, but also can cause certain deformation when the electrode assembly expands. Therefore, the acting force at the score groove can be buffered, the probability of liquid leakage caused by tension-induced rupture at the weakened zone of the score groove is reduced, the service life of the battery cell is prolonged, and the reliability of the battery cell is improved.

In some embodiments, an outer periphery of the buffer groove is provided with a transition zone, and a thickness of the transition zone gradually increases in a direction away from a center of the buffer groove. In the above technical solutions, the thickness of the housing can be prevented from decreasing sharply at the buffer groove, such that the rupture of the housing at the buffer groove due to stress concentration can be avoided to some extent, and the reliability of the battery cell is improved. Meanwhile, the buffer groove can be integrally injection molded with the housing through a mold, such that the manufacturing and forming process of the buffer groove is simpler.

In some embodiments, a width dimension of the transition zone is O in the direction away from the center of the buffer groove, satisfying 3 mm ≤ O ≤ 5 mm. In the above technical solutions, by limiting the width of the transition zone, the integrated injection molding of the buffer groove and the housing can be facilitated, and the strength of the housing can also be improved. This reduces the probability of the rupture of the housing at the buffer groove, improves the reliability of the battery cell, and prolongs the service life of the battery cell.

In some embodiments, the housing includes the pressure relief part, the pressure relief part being provided with the score groove, and the pressure relief part being integrally formed with the wall part of the housing. In the above technical solutions, by integrally forming the pressure relief part with the wall part of the housing, the reliability of the pressure relief part can be improved, the process of connecting the pressure relief part to the wall part of the housing is omitted, and thus the production and manufacturing costs of the battery cell can be reduced.

In some embodiments, the housing includes the pressure relief part, the pressure relief part being provided with the score groove, the pressure relief part being disposed separately from the wall part of the housing, and the pressure relief part being mounted on the wall part of the housing. In the above technical solutions, the pressure relief part is a component independent of the wall part of the housing, and the pressure relief part and the wall part of the housing can be manufactured separately and then assembled, resulting in low generation difficulty and high efficiency.

In some embodiments, the buffer grooves are symmetrically disposed along a geometric center of the housing. In the above technical solutions, the housing as a whole forms a symmetrical structure, which, in an aspect, facilitates the manufacture of the buffer grooves, and in another aspect, allows the buffer grooves to play the same role in buffering the score groove at all positions. Therefore, the probability of tension-induced rupture at a portion of the score groove is reduced, and the reliability of the entire battery cell is improved.

In some embodiments, the buffer groove is integrally formed on the housing. In the above technical solutions, the manufacturing and forming process of the buffer groove can be simplified, and the manufacturing process of the battery cell can be simplified.

In some embodiments, the buffer groove is formed by a trenching process. In the above technical solutions, a buffer groove is formed on the inner surface and/or the outer surface of the housing by digging a groove on the housing. Herein, the groove may be dug through laser etching, chemical corrosion, or machining and milling. This is convenient to implement and facilitates precise control on the dimension of the buffer groove.

In some embodiments, the housing includes a housing body and end covers, at least a side of the housing body being provided with an opening, each end cover being connected to the housing body and being configured to close the corresponding opening, and the score groove being disposed on the housing. In the above technical solutions, by disposing the score groove on the housing body, the structure of the end cover can be simplified, and meanwhile, it is convenient to shorten the distance between the score groove and the main body part of the electrode assembly. Thus, the path for a discharge medium to flow to the score groove during pressure relief is shortened, the time for the discharge medium to reach the score groove is shortened, the timeliness of pressure relief of the battery cell is improved, and thus the reliability of the battery cell is effectively improved.

In some embodiments, two opposite sides of the housing body are each provided with an opening, and two end covers are configured to close the openings on corresponding sides. In the above technical solutions, by disposing two openings on the housing body, the manufacturing and forming of the housing body can be facilitated, and meanwhile, it is convenient for the electrode assembly to lead out the tabs from both ends, thereby facilitating the separation of the two electrical connection parts and reducing the risk of short circuits of the battery cell.

In some embodiments, the end cover is provided with an electrical connection part, the electrical connection part being electrically connected to the positive electrode plate, or the electrical connection part being electrically connected to the negative electrode plate. In the above technical solutions, electric energy of the battery cell can be input or output.

In some embodiments, the housing body is provided with the first wall part, the first wall part being provided with the score groove, and the first wall part being configured to support the electrode assembly and being located under the electrode assembly. In the above technical solutions, the score groove may be disposed at the bottom of the battery cell, the bottom of the battery cell may be provided with an exhaust channel, and the exhaust channel may be in communication with the predetermined pressure relief zone, so as to discharge the high-temperature and high-pressure smoke through the bottom into the exhaust channel when the battery cell is subjected to thermal runaway, thereby discharging the smoke to the outside.

In some embodiments, the predetermined pressure relief zone is provided with a predetermined opening boundary, where the predetermined opening boundary is enclosed by an outer edge of an orthographic projection of at least a portion of the score groove in a depth direction of the score groove; or the predetermined opening boundary is enclosed by connecting lines between a plurality of end parts of the score groove; or the predetermined opening boundary is enclosed by both the connecting lines between the plurality of end parts of the score groove and the outer edge of the orthographic projection of the at least a portion of the score groove in the depth direction of the score groove. In the above technical solutions, by adopting the score groove of the above structure, it is beneficial to rapid pressure relief of the pressure relief part.

In a second aspect, the present application provides a battery, which includes the battery cell according to the above embodiments.

In a third aspect, the present application provides an electric device, which includes the battery according to the above embodiments, and the battery is configured to provide electric energy.

The above description is only an overview of the technical solutions of the present application. To more clearly understand the technical means of the present application to enable implementation in accordance with the content of the specification and to make the above and other purposes, features, and advantages of the present application more obvious and easy to understand, the detailed description of the present application is provided below.

### BRIEF DESCRIPTION OF THE DRAWINGS

By reading the detailed description of the preferred embodiments below, various additional advantages and benefits will become clear to those of ordinary skill in the art. The drawings are provided solely for the purpose of illustrating the preferred embodiments and shall not be construed as limiting the scope of the present application. Furthermore, the same reference numerals in all the drawings denote identical components. In the drawings:
FIG. 1 is a schematic diagram of an electric device in the related art;
FIG. 2 is a schematic diagram of a battery in the related art;
FIG. 3 is a schematic diagram of a battery cell according to some embodiments of the present application;
FIG. 4 is an exploded view of a battery cell according to some embodiments of the present application;
FIG. 5 is a schematic diagram of an electrode assembly according to some embodiments of the present application;
FIG. 6 is a schematic diagram of an electrode assembly according to some other embodiments of the present application;
FIG. 7 is a schematic diagram of a pressure relief part according to some embodiments of the present application;
FIG. 8 is a cross-sectional view along line A-A in FIG. 7;
FIG. 9 is a cross-sectional view along line B-B in FIG. 7;
FIG. 10 is an enlarged view of the circled portion C in FIG. 9;
FIG. 11 is a schematic diagram of a housing according to some embodiments of the present application;
FIG. 12 is a cross-sectional view of a housing according to some embodiments of the present application;
FIG. 13 is an enlarged view of the circled portion D in FIG. 12;
FIG. 14 is a partial cross-sectional view of a housing according to some embodiments of the present application;
FIG. 15 is an enlarged view of the circled portion E in FIG. 14 according to some embodiments;
FIG. 16 is a partial cross-sectional view of a housing according to some embodiments of the present application;
FIG. 17 is a schematic diagram of a housing according to some embodiments of the present application;
FIG. 18 is a cross-sectional view of the structure shown in FIG. 17;
FIG. 19 is an enlarged view of the circled portion F in FIG. 18;
FIG. 20 is a schematic diagram of a housing according to some embodiments of the present application;
FIG. 21 is an exploded view of a battery cell according to some embodiments of the present application;
FIG. 22 is a bottom view of the structure shown in FIG. 21;
FIG. 23 is an exploded view of a battery cell according to some embodiments of the present application;
FIG. 24 is a bottom view of the structure shown in FIG. 23;
FIG. 25 is a cross-sectional view of the battery cell shown in FIG. 23;
FIG. 26 is an enlarged view of the circled portion G in FIG. 25;
FIG. 27 is a schematic diagram of a battery cell according to some embodiments of the present application;
FIG. 28 is a partial schematic diagram of a housing according to some embodiments of the present application;
FIG. 29 is a top view of a housing according to some embodiments of the present application;
FIG. 30 is a cross-sectional view along line H-H in FIG. 29 according to some embodiments;
FIG. 31 is a cross-sectional view along line I-I in FIG. 29 according to some embodiments;
FIG. 32 is an enlarged view of the circled portion J in FIG. 31;
FIG. 33 is a cross-sectional view along line H-H in FIG. 29 according to some other embodiments;
FIG. 34 is a cross-sectional view along line I-I in FIG. 29 according to some other embodiments;
FIG. 35 is an enlarged view of the circled portion K in FIG. 34;
FIG. 36 is a schematic diagram of a housing according to some embodiments of the present application;
FIG. 37 is a cross-sectional view of the housing shown in FIG. 36;
FIG. 38 is an enlarged view of the circled portion L in FIG. 37;
FIG. 39 is a schematic diagram of a first wall part according to some embodiments of the present application;
FIG. 40 is a cross-sectional view along line M-M in FIG. 39 according to some embodiments;
FIG. 41 is a cross-sectional view along line M-M in FIG. 39 according to some other embodiments;
FIG. 42 is a schematic diagram of a pressure relief part according to some embodiments of the present application;
FIG. 43 is a schematic diagram of a pressure relief part according to some other embodiments of the present application; and
FIG. 44 is a schematic diagram of a pressure relief part according to still some other embodiments of the present application.

### Reference numerals:

battery 1000, vehicle 2000, case 200, first portion 210, first portion 220, battery cell 100, housing 10, housing body 101, end cover 102, first wall part 11, through hole 111, second wall part 12, electrode assembly 20, positive electrode plate 21, negative electrode plate 22, straight zone 23, bending zone 24, electrical connection part 30, pressure relief part 40, predetermined pressure relief zone 401, score groove 41, first circular arc segment 411, first straight line segment 412, second straight line segment 413, third straight line segment 414, arc-shaped segment 415, fourth straight line segment 416, fifth straight line segment 417, sixth straight line segment 418, seventh straight line segment 419 (hinge score 419), buffer groove 50, first buffer groove part 50a, second buffer groove part 50b, transition zone 51, first direction F1, second direction F2, third direction F3.

### DETAILED DESCRIPTION

To make the objectives, technical solutions, and advantages of embodiments of the present application clearer, the technical solutions in the embodiments of the present application will be clearly described hereinafter with reference to the drawings in the embodiments of the present application. It is obvious that the described embodiments are some, but not all, embodiments of the present application. Based on the embodiments in the present application, all other embodiments obtained by those of ordinary skill in the art without creative work shall fall within the protection scope of the present application.

Unless otherwise defined, all technical and scientific terms used in the present application have the same meaning as commonly understood by those skilled in the art to which the present application belongs. The terms used in the specification of the present application are only used to describe specific embodiments and are not intended to limit the present application. The terms "include", "comprise", "provided with", and any variants thereof in the specification and claims of the present application and the above description of the drawings are intended to cover a non-exclusive inclusion. The terms "first", "second", and the like in the specification and claims of the present application and the above drawings are used to distinguish different objects and are not intended to describe a specific order or priority.

Reference in the present application to "embodiment" means that a particular feature, structure, or characteristic described in connection with the embodiment can be included in at least one embodiment of the present application. The references of the word in the context of the specification do not necessarily refer to the same embodiment, nor to separate or alternative embodiments exclusive of other embodiments.

In the present application, the term "and/or" is only an association relationship that describes the associated objects, and indicates that there may be three relationships. For example, A and/or B may indicate that: only A is present, both A and B are present, and only B is present. In addition, the character "/" in the present application generally indicates an "or" relationship between the associated objects before and after the "/".

In the embodiments of the present application, the same reference numerals represent the same components, and for the sake of brevity, detailed descriptions of the same components are omitted in different embodiments. It should be understood that the thickness, length, width, and other dimensions of various components in the embodiments of the present application shown in the drawings, as well as the overall thickness, length, width, and other dimensions of the integrated device are only exemplary and should not impose any limitation on the present application.

The term "plurality of" used in the present application refers to no less than two (including two).

In the embodiments of the present application, the battery cell may be a secondary battery. The secondary battery refers to a battery cell that can be reused by activating the active material through charging after the battery cell is discharged.

The battery cell may be a lithium-ion battery, a sodium-ion battery, a sodium-lithium-ion battery, a lithium metal battery, a sodium metal battery, a lithium-sulfur battery, a magnesium-ion battery, a nickel-hydrogen battery, a nickel-cadmium battery, a lead storage battery, and the like. This is not limited in the embodiments of the present application.

The battery described in the embodiments of the present application refers to a single physical module that may include one or more battery cells to provide a higher voltage and capacity. When there are a plurality of battery cells, the plurality of battery cells are connected in series, in parallel, or in series-parallel by a busbar component.

In some embodiments, the battery may be a battery module, and when there are a plurality of battery cells, the plurality of battery cells are disposed and fixed to form one battery module.

In some embodiments, the battery may be a battery pack. The battery pack includes a case and a battery cell, and the battery cell or the battery module is accommodated in the case.

In some embodiments, the case may be a portion of the chassis structure of the vehicle. For example, a portion of the case may become at least a portion of the floor of the vehicle, or a portion of the case may become at least a portion of a crossmember and a longitudinal member of the vehicle.

In some embodiments, the battery may be an energy storage device. The energy storage device includes an energy storage container, an energy storage electric cabinet, and the like.

Battery technology advancement requires consideration of various design factors at the same time, such as energy density, cycle life, discharge capacity, charging and discharging rate, and other performance parameters. In addition, the safety of the battery also needs to be considered.

In the battery cell, in order to ensure the safety of the battery cell, a pressure relief part may be disposed on the housing of the battery cell. When the battery cell is subjected to thermal runaway, the pressure inside the battery cell is released through the pressure relief part, so as to improve the safety of the battery cell.

During use of the battery cell in charging and discharging, the electrode assembly may expand, causing the housing to bulge and deform. The pressure relief part is disposed on the housing, and especially, some pressure relief parts are disposed on the wall part on the side proximal to the electrode assembly. The expansion of the electrode assembly may deform the wall part where the pressure relief part is located, thereby exerting a tensile force on the score of the pressure relief part, resulting in liquid leakage and the like caused by rupture at the score of the pressure relief part. As a result, the rupture of the pressure relief part may occur when the pressure inside the battery cell has not reached the rupture pressure of the pressure relief part, leading to failure of the pressure relief part and reduced reliability of the pressure relief part.

In view of this, the embodiments of the present application provide a battery cell, which includes: an electrode assembly; and a housing, where the housing is configured to accommodate the electrode assembly, and the housing is provided with a score groove and a buffer groove, the score groove defining a predetermined pressure relief zone opened when the battery cell is subjected to pressure relief, and the buffer groove being located on a side of the score groove distal to a geometric center of the predetermined pressure relief zone.

In such a battery cell, by providing the buffer groove on the outer side of the score groove, the housing can be deformed at the buffer groove to some extent when the electrode assembly expands, such that the expansion force of the electrode assembly can be released at the buffer groove, and the acting force transmitted to the score groove is reduced. Therefore, the degree of deformation at the score groove is reduced, the probability of liquid leakage caused by tension-induced rupture at the score groove is reduced, the service life of the battery cell is prolonged, and the reliability of the battery cell is improved.

The technical solutions described in the embodiments of the present application are suitable for batteries and electric devices using batteries.

The electric device may be a vehicle, a mobile phone, a portable device, a laptop computer, a ship, a spacecraft, an electric toy, an electric tool, or the like. The vehicle may be a petrol or diesel vehicle, a natural gas vehicle, or a new energy vehicle, and the new energy vehicle may be a pure electric vehicle, a hybrid electric vehicle, an extended-range vehicle, or the like; the spacecraft includes an airplane, a rocket, a space shuttle, a spaceship, and the like; the electric toy includes a stationary or mobile electric toy, such as a game console, an electric car toy, an electric ship toy, and an electric airplane toy; the electric tool includes an electric metal cutting tool, an electric grinding tool, an electric assembling tool, and an electric tool for railways, such as an electric drill, an electric grinder, an electric wrench, an electric screwdriver, an electric hammer, an electric impact drill, a concrete vibrator, and an electric planer. The electric devices described above are not specially limited in the embodiments of the present application.

For ease of explanation, the following embodiments will be described by taking a vehicle as an example of the electric device.

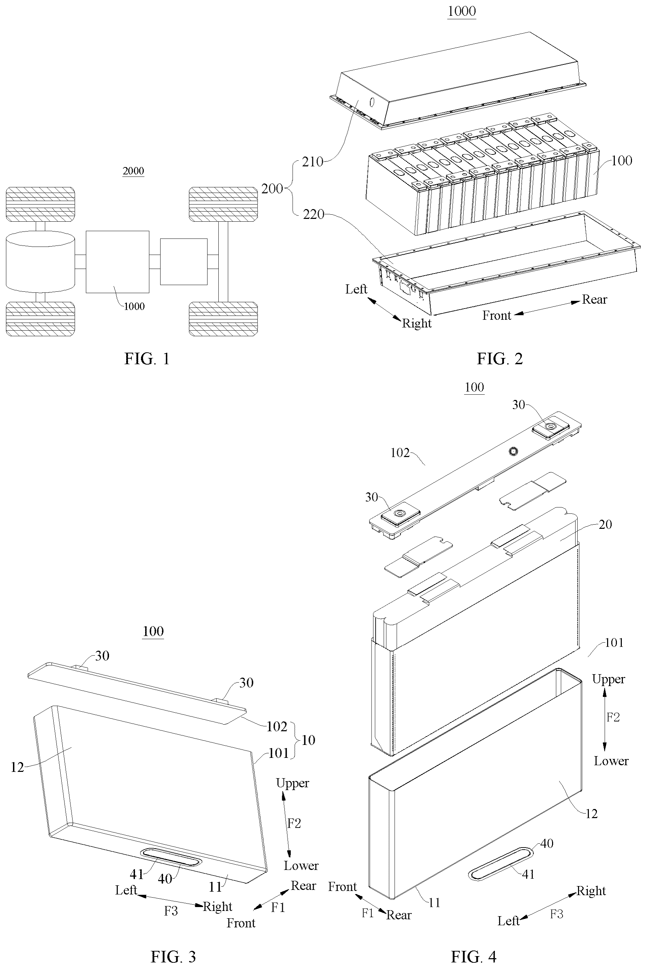

Referring to FIG. 1, FIG. 1 is a structural schematic diagram of a vehicle 2000 according to some embodiments of the present application. A battery 1000 is disposed inside the vehicle 2000, and the battery 1000 may be disposed at the bottom, head, or tail of the vehicle 2000. The battery 1000 may be configured to power the vehicle 2000. For example, the battery 1000 may serve as an operation power source of the vehicle 2000.

The vehicle 2000 may further include a controller and a motor. The controller is configured to control the battery 1000 to supply power to the motor, e.g., for operation power needed for starting, navigating, and driving of the vehicle 2000.

In some embodiments of the present application, the battery 1000 may not only serve as an operation power source for the vehicle 2000, but also as a driving power source for the vehicle 2000 to, instead of or in part instead of fuel or natural gas, provide driving power for the vehicle 2000.

Referring to FIG. 2, FIG. 2 is an exploded view of a battery 1000 according to some embodiments of the present application. The battery 1000 includes battery cells 100 and a case 200, and the case 200 is configured to accommodate the battery cells 100.

The case 200 is a component for accommodating the battery cells 100, the case 200 provides a placement space for the battery cells 100, and the case 200 may be of various structures. In some embodiments, the case 200 may include a first portion 210 and a second portion 220. The first portion 210 and the second portion 220 are mutually lidded with each other to define a placement space for accommodating the battery cells 100. The first portion 210 and the second portion 220 may be in various shapes, such as a cylindrical shape and a rectangular parallelepiped shape. The first portion 210 may be a hollow structure with one side open, the second portion 220 may also be a hollow structure with one side open, and the open side of the first portion 210 is lidded with the open side of the second portion 220 to form a case 200 having a placement space. Alternatively, the first portion 210 is a hollow structure with one side open, the second portion 220 is of a plate-like structure, and the open side of the first portion 210 is lidded with the second portion 220 to form a case 200 having a placement space. As an example, the battery cell 100 may be a cylindrical battery cell, a prismatic battery cell, a pouch battery cell, or a battery cell 100 of other shapes. The prismatic battery cell includes a square-housing battery cell, a blade-shaped battery cell, and a multi-prismatic battery, and the multi-prismatic battery is, e.g., a hexagonal prismatic battery. This is not particularly limited in the present application.

In the battery 1000, one or more battery cells 100 may be provided. If a plurality of battery cells 100 are provided, the plurality of battery cells 100 may be connected in series, in parallel, or in series-parallel. The series-parallel connection means that both series connection and parallel connection are present in the connection of the plurality of battery cells 100. Alternatively, the plurality of battery cells 100 may be first connected in series, in parallel, or in series-parallel to form battery modules, and then the plurality of battery modules are connected in series, in parallel, or in series-parallel to form a whole to be accommodated in the case 200. Alternatively, all the battery cells 100 may be directly connected in series, in parallel, or in series-parallel, and then the whole formed by all the battery cells 100 is accommodated in the case 200.

Referring to FIGs. 3 and 4, FIG. 3 is a schematic diagram of a battery cell 100 according to some embodiments of the present application, and FIG. 4 is an exploded view of a battery cell 100 according to some embodiments of the present application. The battery cell 10 may include a housing 10 and an electrode assembly 20.

The housing 10 is configured to accommodate components such as an electrode assembly 20 and an electrolyte. The housing 10 may be a steel housing, an aluminum housing, a plastic housing (such as polypropylene), a composite metal housing (such as a copperaluminum composite housing), an aluminum-plastic film, or the like. As an example, the housing 10 may include a housing body 101 and an end cover 102.

The housing body 101 may be a hollow structure with an opening formed at one end, or the housing body 101 may be a hollow structure with openings formed at two opposite ends. The housing body 101 may be made of various materials, such as copper, iron, aluminum, steel, and aluminum alloy.

The end cover 102 is a component that closes the opening of housing body 101 to isolate the internal environment of the battery cell 100 from the external environment. The end cover 102 and the housing body 101 together define an accommodating space for accommodating the electrode assembly 20, the electrolyte, and other components. The end cover 102 may be connected to the housing body 101 by welding or winding, to close the opening of the housing body 101. The shape of the end cover 102 may be adapted to the shape of the housing 10. For example, the housing body 101 is a rectangular parallelepiped structure, and the end cover 102 is a rectangular plate-shaped structure adapted to the housing 10. The end cover 102 may also be made of various materials, such as copper, iron, aluminum, steel, and aluminum alloy.

In the battery cell 10, one or two end covers 102 may be provided. In an embodiment in which the housing body 101 is a hollow structure with openings formed at two ends, two end covers 102 may be correspondingly disposed. The two end covers 102 respectively close the two openings of the housing body 101, and the two end covers 102 and the housing body 101 jointly define the accommodating space. In an embodiment in which the housing body 101 is a hollow structure with an opening formed at one end, one end cover 102 may be correspondingly disposed. The end cover 102 closes the opening at one end of the housing body 101, and the one end cover 102 and the housing body 101 jointly define the accommodating space.

The electrode assembly 20 includes a positive electrode, a negative electrode, and a separator. During the charging and discharging process of the battery cell 100, active ions (such as lithium ions) are intercalated and deintercalated back and forth between the positive electrode and the negative electrode. The separator is disposed between the positive electrode and the negative electrode to prevent the positive and negative electrodes from short-circuiting while allowing the passage of active ions.

In some embodiments, the positive electrode may be a positive electrode plate 21, the positive electrode plate 22 may include a positive electrode current collector and a positive electrode active substance zone disposed on at least one surface of the positive electrode current collector, and the positive electrode active substance zone has a positive electrode active material.

As an example, the positive electrode current collector has two surfaces opposite to each other in its own thickness direction, and the positive electrode active substance zone is disposed on any one or both of the two opposite surfaces of the positive electrode current collector.

In some embodiments, the negative electrode may be a negative electrode plate 22, and the negative electrode plate 22 may include a negative electrode current collector and a negative electrode active substance zone disposed on at least one surface of the negative electrode current collector.

As an example, the negative electrode current collector has two surfaces opposite to each other in its own thickness direction, and the negative electrode active substance zone is disposed on any one or both of the two opposite surfaces of the negative electrode current collector.

In some embodiments, the material of the positive electrode current collector may be aluminum, and the material of the negative electrode current collector may be copper.

In some embodiments, the electrode assembly 20 further includes a separator disposed between the positive electrode and the negative electrode.

In some embodiments, the separator is a separation film. The present application does not particularly limit the type of the separation film, and any porous-structure separation film known to have good chemical stability and mechanical stability may be selected and used.

In some embodiments, the separator is a solid-state electrolyte. The solid-state electrolyte is disposed between the positive electrode and the negative electrode, serving both to transport ions and to isolate the positive electrode and the negative electrode.

In some embodiments, the battery cell 100 further includes an electrolyte that serves to conduct ions between the positive electrode and the negative electrode. The present application has no specific restrictions on the type of the electrolyte, which can be selected according to needs. The electrolyte may be liquid, gel, or solid.

In some embodiments, the electrode assembly 20 is of a wound structure. The positive electrode plate and the negative electrode plate are wound to form a wound structure.

In some embodiments, the electrode assembly 20 is of a stacked structure.

As an example, a plurality of positive electrode plates 21 and a plurality of negative electrode plates 22 may be disposed respectively, and the plurality of positive electrode plates 21 and the plurality of negative electrode plates 22 are alternately disposed in a stacked manner.

As an example, a plurality of positive electrode plates 21 may be disposed, and the negative electrode plate 22 is folded to form a plurality of folded segments disposed in a stacked manner, with one positive electrode plate disposed between adjacent folded segments.

As an example, the positive electrode plate 21 and the negative electrode plate 22 are both folded to form a plurality of folded segments disposed in a stacked manner. As an example, there may be a plurality of separators, and each separator is disposed between any adjacent positive electrode plates or negative electrode plates separately. As an example, the separators may be disposed continuously between any adjacent positive electrode plates or negative electrode plates by folding or winding.

In some embodiments, the shape of the electrode assembly 20 may be flat, multi-prismatic, or the like.

In some embodiments, the electrode assembly 20 is provided with tabs that can conduct current out from the electrode assembly 20. The tab includes a positive electrode tab and a negative electrode tab.

The battery cell 100 may further include an electrical connection part. The electrical connection part may be disposed on the housing 10, and is configured to be electrically connected with the tab of the electrode assembly 20 to output the electric energy of the battery cell 10. The electrical connection part may be directly connected to the tab. For example, the electrical connection part is directly welded to the tab. Alternatively, the electrical connection part may be indirectly connected with the tab. For example, the electrical connection part is indirectly connected with the tab via a current collecting member. The current collecting member may be a metal conductor, such as copper, iron, aluminum, steel, or an aluminum alloy.

As shown in FIGs. 3 and 4, taking an example in which the housing body 101 is a hollow structure with an opening formed at one end, two electrical connection parts may be disposed on the end cover 102. The two electrical connection parts are a positive electrical connection part and a negative electrical connection part respectively. The positive electrical connection part is electrically connected with the positive electrode tab, and the negative electrical connection part is electrically connected with the negative electrode tab.

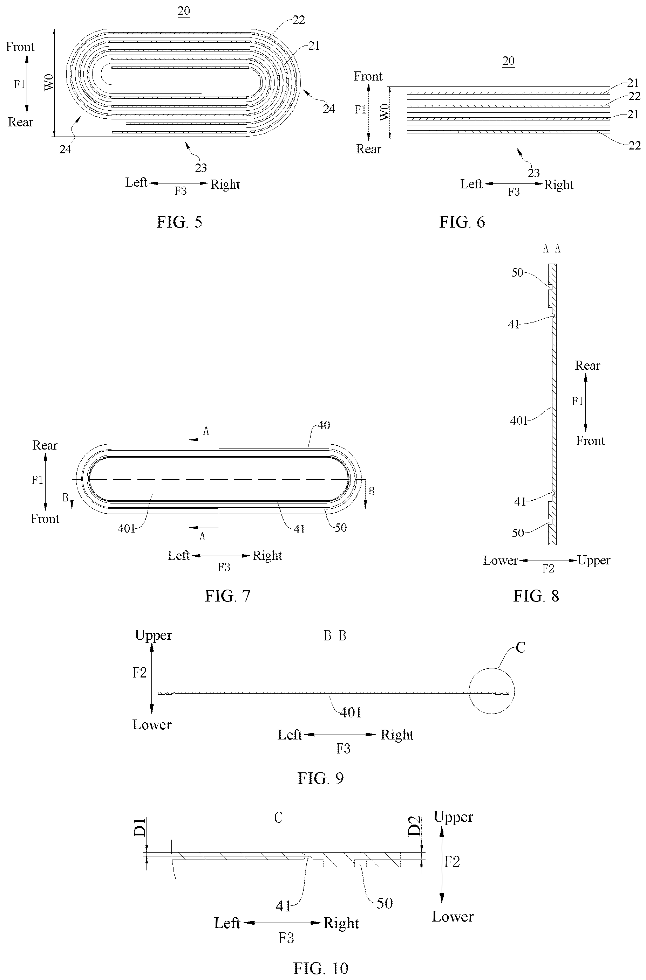

Referring to FIGs. 5 and 6, FIG. 5 is a schematic diagram of an electrode assembly 20 according to some embodiments of the present application; and FIG. 6 is a schematic diagram of an electrode assembly 20 according to some other embodiments of the present application. The electrode assembly 20 includes a positive electrode plate 21 and a negative electrode plate 22. The positive electrode plate 21 includes a positive electrode main body and a positive electrode tab. The positive electrode tab is led out from one end of the positive electrode main body, most areas of the positive electrode tab are not coated with the positive electrode active material, and most areas of the positive electrode main body are coated with the positive electrode active material. The negative electrode plate 22 includes a negative electrode main body and a negative electrode tab. The negative electrode tab is led out from one end of the negative electrode main body, most areas of the negative electrode tab are not coated with the negative electrode active material, and most areas of the negative electrode main body are coated with the negative electrode active material. The positive electrode main body and the negative electrode main body together constitute a main body part of the electrode assembly.

As shown in FIG. 5, the electrode assembly 20 includes a plurality of electrode plates disposed in a wound manner, and the electrode assembly 20 includes a straight zone 23 and a bending zone 24 connected to an end part of the straight zone 23.

The plurality of electrode plates are disposed in a wound manner, that is, the positive electrode plate 21 and the negative electrode plate 22 are disposed in a stacked manner and then wound around a set axis to form the electrode assembly 20. The straight zone 23 is a portion of the electrode plate that extends along a plane after being wound. The bending zone 24 is a portion of the electrode plate that extends along an arc-shaped surface after being wound. For example, as shown in FIG. 5, a portion of the electrode assembly 20 between the front surface and the rear surface is formed as the straight zone 23. The extension direction of the electrode plates in the straight zone 23 is the length direction of the straight zone 23. As shown in FIG. 5, the thickness dimension of the straight zone 23 in the front-rear direction is WO, and left and right end parts of the straight zone 23 are the bending zones 24.

As shown in FIG. 6, the electrode assembly 120 includes a plurality of electrode plates disposed in a stacked manner, and the electrode assembly 20 is provided with a straight zone 23.

The plurality of electrode plates are disposed in a stacked manner, for example, the at least one positive electrode plate 21 and the at least one negative electrode plate 22 are disposed in a stacked manner to form the electrode assembly 20. The straight zone 23 is formed by stacking at least a portion of the positive electrode plate 21 and the negative electrode plate 22, or by stacking at least a portion of the positive electrode plate 21 and the negative electrode plate 22. The extension direction of the electrode plates in the straight zone 23 is the length direction of the straight zone 23. As shown in FIG. 6, the thickness dimension of the straight zone 23 in the front-rear direction is WO.

Referring to FIGs. 7-38, the battery cell 100 according to the embodiments of the present application includes: an electrode assembly 20 and a housing 10. The housing 10 is configured to accommodate the electrode assembly 20. The housing 10 is provided with a score groove 41 and buffer grooves 50. The score groove 41 defines a predetermined pressure relief zone 401 that is opened when the battery cell 100 is subjected to pressure relief, and the buffer groove 50 is located on a side of the score groove 41 distal to the geometric center of the predetermined pressure relief zone 401.

The housing 10 refers to a structural member on the outermost side of the battery cell 100, and the housing 10 accommodates the electrode assembly 20, the electrolyte, and the like.

The electrode assembly 20 is disposed in the housing 10. One electrode assembly 20 or a plurality of electrode assemblies 20 may be disposed in the housing 10. Each electrode assembly 20 includes at least one positive electrode plate 21 and at least one negative electrode plate 22.

The housing 10 is provided with a score groove 41. The score groove 41 may be disposed on a wall part of the housing 10 or on a structural member mounted on the wall part of the housing 10. The housing 10 is provided with a weakened zone at the score groove 41. The score groove 41 defines the predetermined pressure relief zone 401. The predetermined pressure relief zone 401 is configured to release the internal pressure of the battery cell 100 when the internal pressure of the battery cell 100 reaches a threshold value, that is, to discharge the discharge medium inside the battery cell 100 through the predetermined pressure relief zone 401 so as to achieve the purpose of pressure relief. The design of the threshold value varies based on different design requirements. The threshold value may depend on the material of one or more of the positive electrode plate 21, the negative electrode plate 22, the electrolyte, and the separator in the battery cell 100.

The predetermined pressure relief zone 401 is provided with a predetermined opening boundary, where the predetermined opening boundary is enclosed by the outer edge of the orthographic projection of at least a portion of the score groove 41 in the second direction F2; or the predetermined opening boundary is enclosed by connecting lines between a plurality of end parts of the score groove 41; or the predetermined opening boundary is enclosed by both the connecting lines between the plurality of end parts of the score groove 41 and the outer edge of the orthographic projection of the at least a portion of the score groove 41 in the second direction F2.

The housing 10 is provided with buffer grooves 50, and the buffer groove 50 is located on a side of the score groove 41 distal to the geometric center of the predetermined pressure relief zone 401, such that the buffer groove 50 is located on the outer side of the score groove 41, and the buffer groove 50 is located outside the predetermined pressure relief zone 401. By providing the buffer grooves 50 on the housing 10, that is, the housing 10 is thinned at the positions of the buffer grooves 50, the structural strength of the housing 10 at the positions is reduced, such that the housing 10 is easily deformed at the positions. When the electrode assembly 20 expands, the expansion force acts on the housing 10 to deform the housing 10. Since the housing 10 is more easily deformed at the corresponding position of the buffer groove 50, the expansion force of the electrode assembly 20 can be released at the buffer groove 50 to some extent, thereby reducing the acting force transmitted to the score groove 41, reducing the tensile force on the housing 10 at the score groove 41, reducing the probability of tension-induced rupture at the score groove 41 of the housing 10, and thus reducing the risk of liquid leakage.

In some examples, the cross-sectional shape of the buffer groove 50 may be at least one of a triangle, a rectangle, a square, a semicircle, a circle, an ellipse, and an inverted trapezoid. The buffer groove 50 may be disposed on the inner surface of the housing 10, or on the outer surface of the housing 10. Or, the buffer grooves 50 may be disposed on the inner surface and the outer surface of the housing 10, respectively. The buffer grooves 50 may be disposed symmetrically or asymmetrically along the center of the housing 10.

In the technical solutions of the embodiments of the present application, by providing the buffer groove 50 on the outer side of the score groove 41, the housing 10 can be deformed at the buffer groove 50 to some extent when the electrode assembly 20 expands, such that the expansion force of the electrode assembly 20 can be released at the buffer groove 50 to some extent to reduce the acting force transmitted to the score groove 41. Therefore, the degree of deformation of the housing 10 at the score groove 41 is reduced, the probability of liquid leakage of the housing 10 caused by tension-induced rupture at the score groove 41 is reduced, the service life of the battery cell 100 is prolonged, and the reliability of the battery cell is improved.

Referring to FIGs. 7-27, in some embodiments, the score groove 41 and the buffer grooves 50 are located on the same side wall of the housing 10, with the buffer grooves 50 being disposed relative to the edge of the score groove 41 proximal to the housing 10.

As shown in FIGs. 7-27, the housing 10 is provided with a first wall part 11. The first wall part 11 is provided with a score groove 41 and buffer grooves 50. The buffer grooves 50 are located between the score groove 41 and the outer edge of the housing 10. When the electrode assembly 20 expands, the expansion force acts on the housing 10 to exert a tensile force on the first wall part 11. For an electrode assembly 20 with a certain dimension, the expansion force of the electrode assembly 20 exerts a tensile force on the first wall part 11, such that the total tensile length of the first wall part 11 is constant. Providing the buffer grooves 50 enables the tensile deformation on the first wall part 11 at the buffer grooves 50 to be greater, such that the tensile deformation at the score groove 41 is reduced, the probability of liquid leakage of the housing 10 caused by tension-induced rupture at the score groove 41 is reduced, the service life of the battery cell 100 is prolonged, and the reliability of the battery cell is improved.

Referring to FIGs. 7-10, FIG. 7 is a schematic diagram of a pressure relief part according to some embodiments of the present application; FIG. 8 is a cross-sectional view along line A-A in FIG. 7; FIG. 9 is a cross-sectional view along line B-B in FIG. 7; and FIG. 10 is an enlarged view of the circled portion C in FIG. 9. As shown in FIG. 7, in some embodiments, the housing 10 includes a pressure relief part 40, the pressure relief part 40 is disposed separately from the wall part of the housing 10, the pressure relief part 40 is provided with a score groove 41, a buffer groove 50 is disposed on the pressure relief part 40 and is located on one side of the score groove 41 distal to the geometric center of the predetermined pressure relief zone 401, and the thickness of the pressure relief part 40 at the buffer grooves 50 is greater than the thickness of the pressure relief part 40 at the score groove 41.

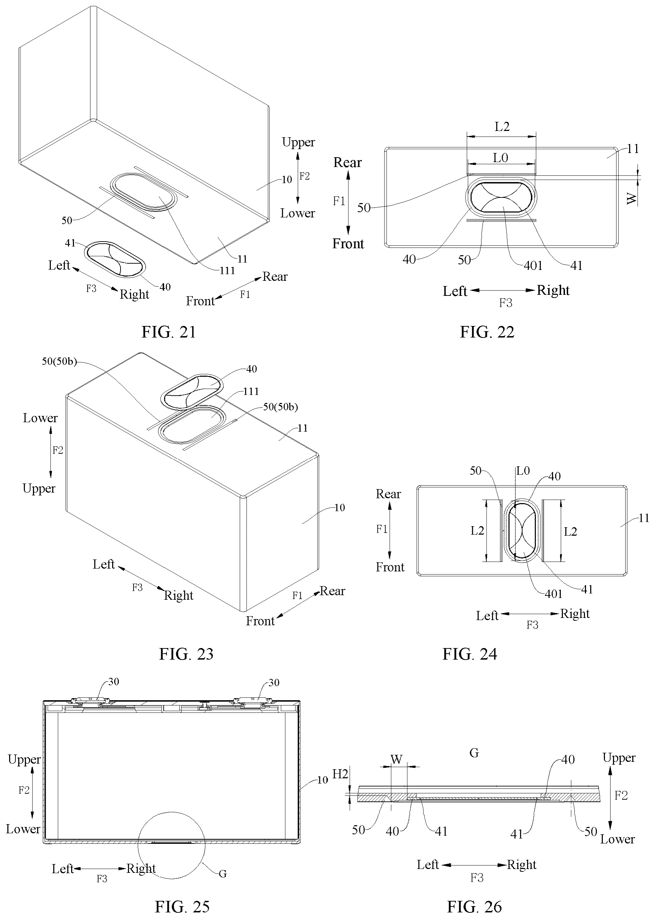

As shown in FIGs. 21 and 23, the housing 10 includes a pressure relief part 40 and a plurality of wall parts. The plurality of wall parts include a first wall part 11 provided with a through hole 111. The pressure relief part 40 is mounted in the through hole 111 of the first wall part 11. When the internal pressure of the battery cell 100 reaches a threshold value, the pressure relief part 40 opens at least a portion of the through hole 111, and the discharge medium inside the battery cell 100 is discharged through the through hole 111 to release the pressure inside the battery cell 100.

As shown in FIGs. 7-10, the pressure relief part 40 is provided with a score groove 41, and the score groove 41 defines the predetermined pressure relief zone 401. When the internal pressure of the battery cell 100 reaches a threshold value, the pressure relief part 40 is at least partially broken, and the predetermined pressure relief zone 401 communicates with at least a portion of the through hole 111 to release the pressure inside the battery cell 100.

As shown in FIGs. 7-10, the pressure relief part 40 is provided with buffer grooves 50, the buffer grooves 50 are each located on one side of the score groove 41 distal to the geometric center of the predetermined pressure relief zone 401, and the buffer grooves 50 are located between the score groove 41 and the outer edge of the pressure relief part 40. When the electrode assembly 20 expands, the expansion force acts on the housing 10 to exert a tensile force on the first wall part 11, thereby exerting a tensile force on the pressure relief part 40. By providing the buffer grooves 50 on the pressure relief part 40, the pressure relief part 40 can have greater tensile deformation at the buffer grooves 50, and the expansion force of the electrode assembly 20 can be released at the buffer grooves 50 to some extent to reduce the acting force transmitted to the score groove 41. Therefore, the tensile deformation at the score groove 41 is reduced, the probability of liquid leakage caused by tension-induced rupture at the score groove 41 is reduced, the rupture of the pressure relief part 40 is avoided to some extent in the normal use process of the battery cell 100, the service life of the battery cell 100 is prolonged, and the reliability of the battery cell is improved.

In addition, the buffer grooves 50 are directly disposed on the pressure relief part 40, the pressure relief part 40 is a component independent of the wall part of the housing 10, and the pressure relief part 40 can be manufactured separately and then assembled onto the wall part of the housing 10, resulting in low generation difficulty and high efficiency.

Referring to FIGs. 4-6 and 11-27, in some embodiments, the electrode assembly 20 includes at least one positive electrode plate 21 and at least one negative electrode plate 22. The at least one positive electrode plate 21 and the at least one negative electrode plate 22 are stacked to form a straight zone 23. At least a portion of the positive electrode plate 21 and at least a portion of the negative electrode plate 22 are stacked in the straight zone 23 along a first direction F1. The housing 10 includes a first wall part 11. The first wall part 11 is located on one side of the electrode assembly 20 along a second direction F2. The second direction F2 is a thickness direction of the first wall part 11 and is perpendicular to the first direction F1. The first wall part 11 is provided with a score groove 41 and buffer grooves 50.

The electrode assembly 20 may be of a stacking type, that is, a plurality of electrode plates of the electrode assembly 20 are disposed in a stacking manner, and the stacked electrode plates form a straight zone 23. In the straight zone 23, the positive electrode plate 21 and at least a portion of the negative electrode plate 22 are disposed in a stacked manner in the first direction F1, or at least a portion of the positive electrode plate 21 and the negative electrode plate 22 are disposed in a stacked manner in the first direction F1. As such, the expansion and deformation of the electrode assembly 20 are particularly obvious in the first direction F1.

The electrode assembly 20 may also be of a wound type. The positive electrode plate 21 and the negative electrode plate 22 of the electrode assembly 20 are superposed with the separator and then are wound and formed such that a straight zone 23 is formed. In the straight zone 23, a portion of the positive electrode plate 21 and a portion of the negative electrode plate 22 are disposed in a stacked manner in the first direction F1. For example, after being wound and formed, each layer of the positive electrode plate 21 and each layer of the negative electrode plate 22 may be penetrated by an axis extending in the first direction F1, such that the expansion and deformation of the electrode assembly 20 are particularly obvious in the first direction F1.

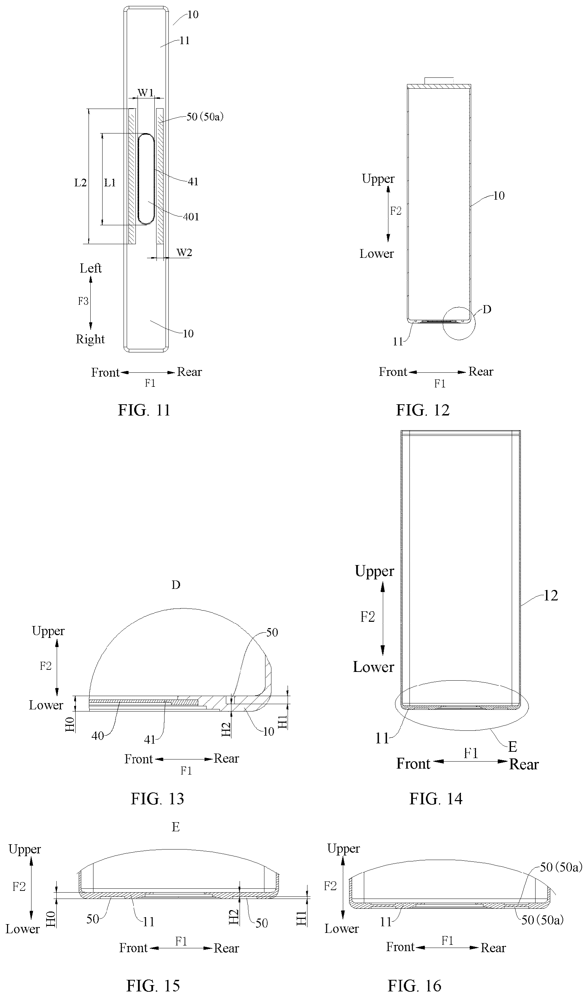

As shown in FIGs. 11 and 12, the first direction F1 is the front-rear direction, and the second direction F2 is the upper-lower direction.

The housing 10 includes a first wall part 11, where the first wall part 11 is located on one side of the electrode assembly 20 in the second direction F2. The second direction F2 is perpendicular to the first direction F1, and the thickness direction of the first wall part 11 is the second direction F2. The first wall part 11 is provided with a score groove 41 and buffer grooves 50.

As shown in FIG. 11, the score groove 41 may be integrally formed on the first wall part 11, and the first wall part 11 is provided with a weakened zone at the score groove 41. Or, as shown in FIGs. 21-26, the score groove 41 may be formed on the pressure relief part 40, the pressure relief part 40 is mounted on the first wall part 11, and the pressure relief part 40 is provided with a weakened zone at the score groove 41.

The buffer grooves 50 are located between the score groove 41 and the outer edge of the first wall part 11. When the electrode assembly 20 expands, the expansion force acts on the housing 10 to exert a tensile force on the first wall part 11. By providing the buffer grooves 50, the first wall part 11 can have greater tensile deformation at the buffer grooves 50. Thus, the tensile deformation at the weakened zone is reduced, the probability of the liquid leakage caused by tension-induced rupture at the weakened zone is reduced, the service life of the battery cell 100 is prolonged, and the reliability of the battery cell is improved.

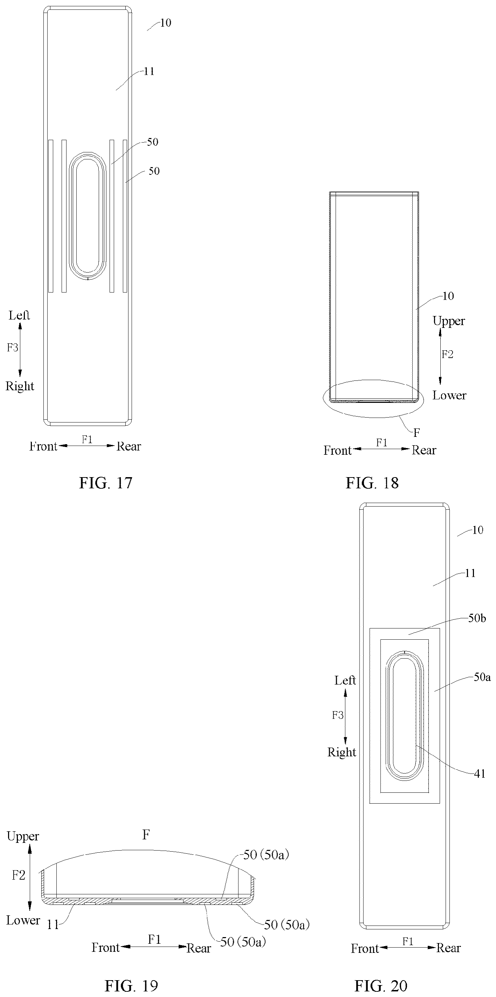

Referring to FIGs. 11-20, FIG. 11 is a schematic diagram of a housing according to some embodiments of the present application; FIG. 12 is a cross-sectional view of a housing according to some embodiments of the present application; FIG. 13 is an enlarged view of the circled portion D in FIG. 12; FIG. 14 is a partial cross-sectional view of a housing according to some embodiments of the present application; FIG. 15 is an enlarged view of the circled portion E in FIG. 14 according to some embodiments; FIG. 16 is a partial cross-sectional view of a housing according to some embodiments of the present application; FIG. 17 is a schematic diagram of a housing according to some embodiments of the present application; FIG. 18 is a cross-sectional view of the structure shown in FIG. 17; FIG. 19 is an enlarged view of the circled portion F in FIG. 18; FIG. 20 is a schematic diagram of a housing according to some embodiments of the present application. In some embodiments, the buffer groove 50 includes a first buffer groove part 50a, and the first buffer groove part 50a is located on one side of the score groove 41 in the first direction F1.

As shown in FIGs. 13 and 15, in some examples, in the first direction F1, one side of the score groove 41 is provided with one first buffer groove part 50a. As shown in FIGs. 16-19, in other examples, one side of the score groove 41 is provided with a plurality of first buffer groove parts 50a. The plurality of first buffer groove parts 50a may be spaced apart in the first direction. The plurality of first buffer groove parts 50a may be located on the lower surface of the first wall part 11, or may be located on the upper surface of the first wall part 11. Alternatively, the first buffer groove parts 50a may be respectively disposed on the lower surface and the upper surface of the first wall part 11. The first buffer groove part 50a on the lower surface and the first buffer groove part 50a on the upper surface of the first wall part 11 may be disposed opposite to each other in the upper-lower direction, or may be disposed in a staggered manner.

As shown in FIG. 14, the housing 10 further includes two second wall parts 12. The two second wall parts 12 are respectively located on both sides of the electrode assembly 20 in the first direction F1. The expansion of the electrode assembly 20 mostly acts on the second wall parts 12. When the electrode assembly 20 expands, the second wall parts 12 undergoes tensile deformation, and the second wall parts 12 exerts a tensile force on the first wall part 11, such that the first wall part 11 is subjected to a greater tensile force in the front-rear direction, that is, the influence of the electrode assembly 20 on the first wall part 11 in the front-rear direction is less significant than the influence of the electrode assembly 20 on the first wall part 11 in the left-right direction.

As shown in FIGs. 14 and 15, the first direction F1 extends in the front-rear direction, and the first buffer groove parts 50a are located on the front and rear sides of the score groove 41. When the electrode assembly 20 expands, the first wall part 11 is subjected to a relatively large tensile force in the front-rear direction which can be released at the first buffer groove parts 50a to some extent. Therefore, the tensile force transmitted to the score groove 41 can be effectively reduced, the probability of tension-induced rupture at the score groove 41 is reduced and thus the risk of liquid leakage is reduced, the service life of the battery cell 100 is prolonged, and the reliability of the battery cell is improved.

As shown in FIG. 11, in some embodiments, a maximum width of the predetermined pressure relief zone 401 in the first direction F1 is W1, and a maximum groove width of the first buffer groove part 50a in the first direction F1 is W2, satisfying 0.3 ≤ W2/W1 ≤ 1.

When one first buffer groove part 50a is disposed on one side of the score groove 41, a maximum groove width of the first buffer groove part 50a in the first direction F1 is W2.

When a plurality of first buffer groove parts 50a are disposed on one side of the score groove 41, as shown in FIG. 16, the upper surface and the lower surface of the first wall part 11 are each provided with a first buffer groove part 50a. When the positions of the two first buffer groove parts 50a correspond to each other and the groove width dimensions thereof are the same, the maximum groove width W2 of the first buffer groove part 50a in the first direction F1 is the maximum groove width of each first buffer groove part 50a in the first direction F1. When the positions of the first buffer groove part 50a on the upper surface and the first buffer groove part 50a on the lower surface of the first wall part 11 correspond to each other, but the groove width dimensions thereof are different, the maximum groove width W2 of the first buffer groove part 50a in the first direction F1 is the larger one of the groove width dimension values of the two first buffer groove parts 50a in the first direction F1. As shown in FIGs. 17-19, when the upper surface or the lower surface of the first wall part 11 is provided with a plurality of first buffer groove parts 50a, the maximum groove width W2 of the first buffer groove part 50a in the first direction F1 is the sum of the groove width dimension values of the plurality of first buffer groove parts 50a in the first direction F1. That is to say, when a plurality of first buffer groove parts 50a are disposed on one side of the score groove 41, the plurality of first buffer groove parts 50a are located on the same side surface of the first wall part 11, and statistical calculation is performed based on the sum of the groove widths of the plurality of first buffer groove parts 50a. When both the upper surface and the lower surface of the first wall part 11 are provided with the first buffer groove parts 50a, the maximum groove width of the first buffer groove part 50a is subjected to statistical calculation based on the first buffer groove part 50a on one side surface of the first wall part 11.

In the case that W2/W1 is too small, if W2 is too small, the groove width of the first buffer groove part 50a in the front-rear direction is small, such that the first wall part 11 has high rigidity at the first buffer groove part 50a and is not easy to deform. In this way, the buffer effect of the first buffer groove part 50a is not obvious, and the weakened zone is prone to tension-induced rupture when the electrode assembly 20 expands; or if W1 is too large, the distance between the score groove 41 and the front-rear edge of the first wall part 11 is too small, such that the weakened zone is prone to tension-induced rupture when the electrode assembly 20 expands.

In the case that W2/W1 is too large, if W2 is too large, the groove width of the first buffer groove part 50a in the front-rear direction is large, and the first buffer groove part 50a occupies more space, resulting in that the area of the predetermined pressure relief zone 401 is too small; or if W1 is too small, the area of the predetermined pressure relief zone 401 is too small, and it may be difficult to meet the demand for timely discharging the gas inside the battery cell 100, which has potential safety hazards.

Therefore, W2/W1 is limited to 0.3-1, and W2/W1 may be any one point value of 0.3, 0.4, 0.5, 0.6, 0.7, 0.8, 0.9, and 1, or a value in a range defined by any two of the point values.

Therefore, by limiting W2/W1, the area of the predetermined pressure relief zone 401 can be enlarged to meet the gas discharge demand, and thus the timeliness of a burst of the pressure relief part is improved. Meanwhile, the rigidity of the first wall part 11 at the first buffer groove part 50a is reduced, and when the electrode assembly 20 expands, the first wall part 11 is deformed to some extent at the first buffer groove part 50a, such that the expansion force can be released to some extent, thereby reducing the tensile deformation at the weakened zone, reducing the probability of liquid leakage caused by tension-induced rupture at the weakened zone, prolonging the service life of the battery cell 100, and improving the reliability of the battery cell.

As shown in FIG. 11, in some embodiments, the maximum length of the predetermined pressure relief zone 401 in a third direction F3 is L1, and the maximum groove length of the first buffer groove part 50a in the third direction F3 is L2, satisfying L2/L1 ≥ 1, and the third direction F3 is perpendicular to the first direction F1 and the second direction F2, separately.

As shown in FIG. 11, the third direction F3 is the left-right direction as shown in FIG. 11. In the left-right direction, if the groove length of the first buffer groove part 50a is smaller than the maximum length of the predetermined pressure relief zone 401, the first buffer groove part 50a is located between a portion of the score groove 41 and the outer edge of the first wall part 11, and the first buffer groove part 50 is not provided between the other portion of the score groove 41 and the outer edge of the first wall part 11. Therefore, tension-induced rupture at a portion of the score groove 41 is easily caused. For this reason, L2/L1 is limited to be greater than or equal to 1, and L2/L1 may be 1, 1.1, 1.15, 1.2, 1.25, or the like.

Therefore, the tensile force applied to the respective positions of the entire predetermined pressure relief zone 401 in the left-right direction is reduced to some extent, and the first buffer groove part 50a can play a role in buffering the force applied to the weakened zone at the respective positions. Thus, the probability of the liquid leakage caused by tension-induced rupture at the weakened zone is reduced, the service life of the battery cell 100 is prolonged, and the reliability of the battery cell is improved.

As shown in FIGs. 5, 6 and 11, in some embodiments, the thickness of the straight zone 23 in the first direction F1 is WO, and the maximum groove width of the first buffer groove part 50a in the first direction F1 is W2, satisfying 0.1 ≤ W2/WO ≤ 0.3.

In the case that W2/WO is too small, if W2 is too small, the groove width of the first buffer groove part 50a in the front-rear direction is small, such that the first wall part 11 has high rigidity at the first buffer groove part 50a and is not easy to deform. In this way, the effect of the first buffer groove part 50a is not obvious, and the weakened zone is prone to tension-induced rupture when the electrode assembly 20 expands; or if WO is too large, the degree of expansion of the electrode assembly 20 is large, such that the tensile force on the score groove 41 is larger, and thus the weakened zone is prone to tension-induced rupture when the electrode assembly 20 expands.

In the case that W2/WO is too large, if W2 is too large, the groove width of the first buffer groove part 50a in the front-rear direction is relatively large, and the first buffer groove part 50a occupies more space, such that the area of the predetermined pressure relief zone 401 is too small, which may be difficult to meet the demand of timely discharging the gas inside the battery cell 100, thereby posing potential safety hazards; or if WO is too small, the thickness dimension of the electrode assembly 20 is small, and the energy density of the battery cell 100 is relatively low.

Therefore, W2/WO is limited to 0.1-0.3, and W2/WO may be any one point value of 0.1, 0.12, 0.13, 0.14, 0.15, 0.16, 0.17, 0.18, 0.19, 0.20, 0.21, 0.22, 0.23, 0.24, 0.25, 0.26, 0.27, 0.28, 0.29, and 0.3, or a value in a range defined by any two of the point values.

Therefore, by limiting W2/WO, the area of the predetermined pressure relief zone 401 can be enlarged on the basis of ensuring that the battery cell 100 has an enough energy density, so as to meet the gas discharge demand, and thus the timeliness of a burst of the pressure relief part is improved. Meanwhile, the rigidity of the first wall part 11 at the first buffer groove part 50a is reduced, and when the electrode assembly 20 expands, the first wall part 11 is deformed to some extent at the first buffer groove part 50a, such that the expansion force can be released to some extent, thereby reducing the tensile deformation at the weakened zone, reducing the probability of liquid leakage caused by tension-induced rupture at the weakened zone, prolonging the service life of the battery cell 100, and improving the reliability of the battery cell.

As shown in FIG. 20, in some embodiments, the buffer groove 50 includes a second buffer groove part 50b, the second buffer groove part 50b being located on a side of the score groove 41 in the third direction F3, and the third direction F3 being perpendicular to the first direction F1 and the second direction F2, separately.

As shown in FIGs. 20, 23 and 24, the left and right sides of the score groove 41 are each provided with a second buffer groove part 50b, and the second buffer groove parts 50b extend in the front-rear direction. At this time, the predetermined pressure relief zone 401 may extend in the front-rear direction, that is, the length direction of the predetermined pressure relief zone 401 is the front-rear direction, such that in the left-right direction, the second buffer groove parts 50b may correspond to the predetermined pressure relief zone 401. Certainly, the predetermined pressure relief zone 401 may extend in the left-right direction, that is, the length direction of the predetermined pressure relief zone 401 is the left-right direction. When the electrode assembly 20 expands, the first wall part 11 is subjected to a certain tensile force in the left-right direction. By providing the second buffer groove parts 50b, the tensile force can be released at the second buffer groove parts 50b to some extent. Therefore, the tensile force transmitted to the score groove 41 can be effectively reduced, the probability of tension-induced rupture at the score groove 41 is reduced and thus the risk of liquid leakage is reduced, the service life of the battery cell 100 is prolonged, and the reliability of the battery cell is improved.

As shown in FIG. 20, the front and rear sides of the score groove 41 are each provided with a first buffer groove part 50a, and the front and rear ends of the second buffer groove part 50b are respectively connected to the first buffer groove parts 50a, such that the buffer groove 50 is formed in a ring shape, that is, the ring-shaped buffer groove 50 is provided as a whole on the outer ring of the score groove 41. Certainly, there may also be a certain gap between the front and rear ends of the second buffer groove part 50b and the first buffer groove parts 50a.

When the electrode assembly 20 expands, the first wall part 11 is subjected to a certain tensile force in the front-rear direction and the left-right direction. By providing the first buffer groove parts 50a and the second buffer groove parts 50b, the tensile force can be released at the first buffer groove parts 50a and the second buffer groove parts 50b to some extent. Therefore, the tensile force transmitted to the score groove 41 can be reduced, the probability of tension-induced rupture at the score groove 41 is reduced and thus the risk of liquid leakage is reduced, the service life of the battery cell 100 is prolonged, and the reliability of the battery cell is improved.

Referring to FIGs. 21-26, FIG. 21 is an exploded view of a battery cell according to some embodiments of the present application; FIG. 22 is a bottom view of the structure shown in FIG. 21; FIG. 23 is an exploded view of a battery cell according to some embodiments of the present application; FIG. 24 is a bottom view of the structure shown in FIG. 23; FIG. 25 is a cross-sectional view of the battery cell shown in FIG. 23; FIG. 26 is an enlarged view of the circled portion G in FIG. 25. In some embodiments, the housing 10 includes a pressure relief part 40, where the score groove 41 is disposed in the pressure relief part 40, the pressure relief part 40 is disposed separately from the first wall part 11, the pressure relief part 40 is mounted on the first wall part 11, and the buffer grooves 50 are located in the first wall part 11.

As shown in FIGs. 21 and 23, the pressure relief part 40 is a separate structural member, the pressure relief part 40 is provided with a score groove 41, and the pressure relief part 40 is fixedly connected with the first wall part 11, for example, by welding. When the electrode assembly 20 expands, the expansion force of the electrode assembly 20 exerts a tensile force on the first wall part 11, and the joint between the pressure relief part 40 and the first wall part 11 undergoes tensile deformation, such that the joint is prone to rupture. By disposing buffer grooves 50 on the first wall part 11, the first wall part 11 can have greater tensile deformation at the buffer grooves 50, thereby reducing the tensile deformation at the joint between the pressure relief part 40 and the first wall part 11. The buffer grooves 50 can play a role in effectively buffering the joint between the pressure relief part 40 and the first wall part 11, thus reducing the probability of liquid leakage caused by tension-induced rupture at the joint, and meanwhile, reducing the tensile deformation at the score groove 41, reducing the probability of liquid leakage of the housing 10 caused by tension-induced rupture at the score groove 41, prolonging the service life of the battery cell 100, and improving the reliability of the battery cell.

As shown in FIGs. 21-26, in some embodiments, the pressure relief part 40 has a length direction, the maximum dimension of the pressure relief part 40 in the length direction is L0, at least a portion of the buffer groove 50 extends in the length direction, and the maximum groove length of the buffer groove 50 in the length direction is L2, where -30 mm ≤ L2-LO ≤ 30 mm.

As shown in FIGs. 21 and 22, the pressure relief part 40 extends in the left-right direction, the buffer groove 50 includes a first buffer groove part 50a, the first buffer groove part 50a extends in the left-right direction, and the maximum groove length of the first buffer groove part 50a in the left-right direction is L2. When a plurality of first buffer groove parts 50a are provided, the maximum value of the groove lengths of the plurality of first buffer groove parts 50a in the left-right direction is L2.

As shown in FIGs. 23 and 24, the pressure relief part 40 extends in the front-rear direction, the buffer groove 50 includes a second buffer groove part 50b, the second buffer groove part 50b extends in the left-right direction, and the maximum groove length of the second buffer groove part 50b in the left-right direction is L2. When a plurality of second buffer groove parts 50b are provided, the maximum value of the groove lengths of the plurality of second buffer groove parts 50b in the left-right direction is L2.

In the left-right direction, in the case that L2-L0 is too small, if L2 is too small, the buffering effect of the first buffer groove part 50a on the joint between the pressure relief part 40 and the first wall part 11 is too small; or in the case that L2-LO is too small, if L2 is too large, the first buffer groove part 50a occupies too much, such that the structural strength of the first wall part 11 is reduced, and the first wall part 11 is prone to rupture in scenarios such as dropping, thus affecting the reliability of the battery cell 100.

Therefore, L2-LO is limited between -30 mm and 30 mm, and L2-L0 may be any one point value of -30 mm, -25 mm, -20 mm, -15 mm, -10 mm, -5 mm, 0, 5 mm, 10 mm, 15 mm, 20 mm, 25 mm, and 30 mm, or a value in a range defined by any two of the point values.

Therefore, the buffer groove 50 can play a role in effectively buffering the joint between the pressure relief part 40 and the first wall part 11, reducing the probability of liquid leakage caused by tension-induced rupture at the joint, and meanwhile, avoiding transitional decrease in the structural strength of the first wall part 11 to some extent, and reducing the probability of rupture at the first wall part 11 during tests or use.

As shown in FIG. 26, in some embodiments, the minimum distance between the edge of the buffer groove 50 proximal to the pressure relief part 40 and the edge of the pressure relief part 40 is W, satisfying 0.2 mm ≤ W ≤ 25 mm.

As shown in FIG. 26, in some examples, the buffer grooves 50 include second buffer groove parts 50b, where the second buffer groove parts 50b are located on the left and right sides of the pressure relief part 40, and in the left-right direction, the minimum distance between the second buffer groove parts 50b and the edge of the pressure relief part 40 is W; when a plurality of second buffer groove parts 50b are provided, the minimum distance between the second buffer groove part 50b of the plurality of second buffer groove parts 50b that is closest to the pressure relief part 40 and the edge of the pressure relief part 40 is W.

As shown in FIG. 22, in other examples, the buffer grooves 50 include first buffer groove parts 50a, where the first buffer groove parts 50a are located on the front and rear sides of the pressure relief part 40. In the front-rear direction, the minimum distance between the first buffer groove part 50a and the edge of the pressure relief part 40 is W. When a plurality of first buffer groove parts 50a are provided, the minimum distance between the first buffer groove part 50a of the plurality of first buffer groove parts 50a that is closest to the pressure relief part 40 and the edge of the pressure relief part 40 is W.

If W is too small, the distance between the buffer groove 50 and the edge of the pressure relief part 40 is relatively small, which easily leads to insufficient structural strength of the joint between the first wall part 11 and the pressure relief part 40. Therefore, the rupture in scenarios such as dropping is easily caused, and meanwhile, the tension-reduced rupture is easily caused under the action of the expansion force of the electrode assembly 20, thus affecting the reliability of the battery cell 100; if W is too large, the distance between the buffer groove 50 and the edge of the pressure relief part 40 is relatively large, and thus the buffering effect of the buffer groove 50 on the joint between the pressure relief part 40 and the first wall part 11 is too small.

Therefore, W is limited between 0.2 mm and 25 mm, and W may be any one point value of 0.2 mm, 1 mm, 2 mm, 3 mm, 4 mm, 5 mm, 6 mm, 7 mm, 8 mm, 9 mm, 10 mm, 11 mm, 12 mm, 13 mm, 14 mm, 15 mm, 16 mm, 17 mm, 18 mm, 19 mm, 20 mm, 21 mm, 22 mm, 23 mm, 24 mm, and 25 mm, or a value in a range defined by any two of the point values.

By limiting the W within the above range, the buffer groove 50 plays a role in buffering the joint between the pressure relief part 40 and the first wall part 11 to some extent, thus reducing the probability of liquid leakage caused by tension-induced rupture at the joint.

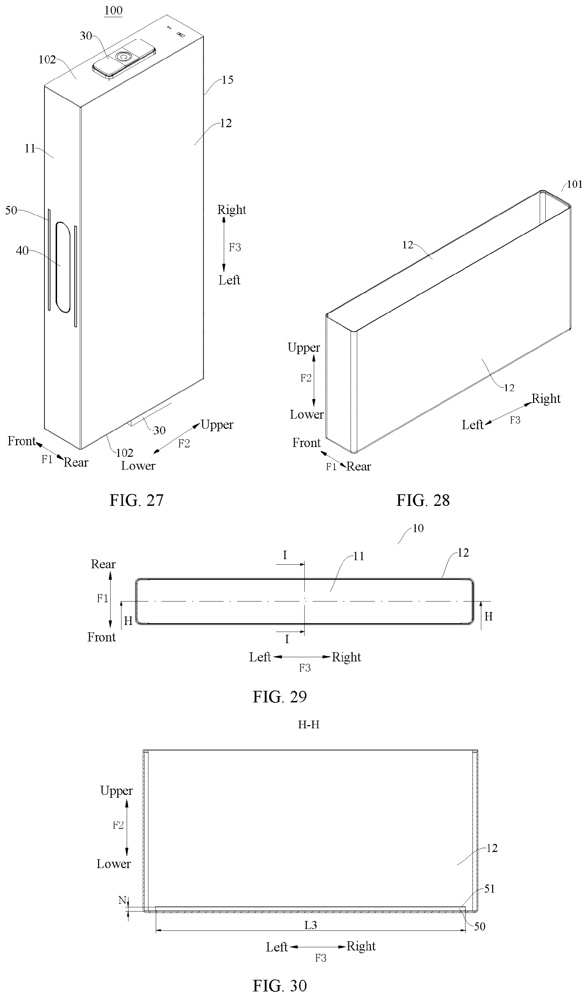

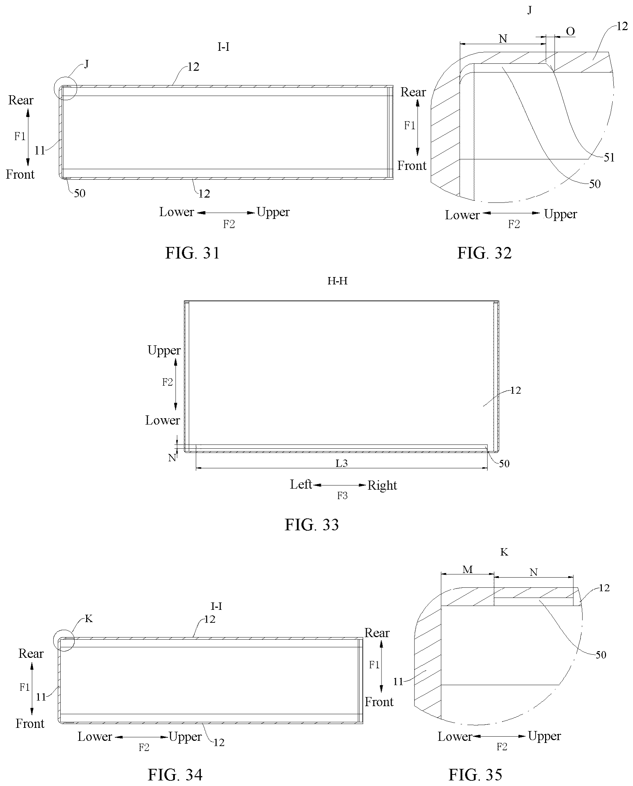

As shown in FIGs. 28-35, FIG. 28 is a partial schematic diagram of a housing according to some embodiments of the present application; FIG. 29 is a top view of a housing according to some embodiments of the present application; FIG. 30 is a cross-sectional view along line H-H in FIG. 29 according to some embodiments; FIG. 31 is a cross-sectional view along line I-I in FIG. 29 according to some embodiments; FIG. 32 is an enlarged view of the circled portion J in FIG. 31; FIG. 33 is a cross-sectional view along line H-H in FIG. 29 according to some other embodiments; FIG. 34 is a cross-sectional view along line I-I in FIG. 29 according to some other embodiments; FIG. 35 is an enlarged view of the circled portion K in FIG. 34. In some embodiments, the score groove 41 and the buffer grooves 50 are located on different side walls of the housing 10.

As shown in FIGs. 28-35, the housing 10 is provided with a first wall part 11 and second wall parts 12. The first wall part 11 is provided with a score groove 41, and the second wall parts 12 are provided with buffer grooves 50. When the electrode assembly 20 expands, the expansion force acts on the second wall parts 12 and the first wall part 11. Since the second wall part 12 is provided with the buffer groove 50, the expansion stress is easily concentrated at the buffer groove 50 of the second wall part 12, such that the second wall part 12 is deformed at the buffer groove 50. Given a constant expansion force, the tensile force applied to the first wall part 11 can be reduced, thereby reducing the probability of liquid leakage caused by tension-induced rupture at the score groove 41 of the first wall part 11, prolonging the service life of the battery cell 100, and improving the reliability of the battery cell.

By disposing the score groove 41 and the buffer groove 50 on different side walls of the housing 10, the reduction in the strength of the wall part provided with the score groove 41 can be avoided to some extent, and meanwhile, the buffer groove 50 is disposed on another wall part to release a portion of the expansion stress, such that the force at the score groove 41 can be buffered, which is beneficial to reducing the probability of liquid leakage caused by tension-induced rupture at the score groove 41, prolonging the service life of the battery cell 100, and improving the reliability of the battery cell.

In some embodiments, the electrode assembly 20 includes at least one positive electrode plate 21 and at least one negative electrode plate 22, where the at least one positive electrode plate 21 and the at least one negative electrode plate 22 are stacked to form a straight zone 23, and at least a portion of the positive electrode plate 21 and at least a portion of the negative electrode plate 22 are stacked in the straight zone 23 in the first direction F1.

The housing 10 includes a first wall part 11 and two second wall parts 12 connected to the first wall part 11, where the two second wall parts 12 are respectively located on two sides of the electrode assembly 20 in the first direction F1, and the first wall part 11 is located on one side of the electrode assembly 20 in a second direction F2, the second direction F2 being a thickness direction of the first wall part 11 and being perpendicular to the first direction F1, the first wall part 11 is provided with a score groove 41, and the second wall parts 12 are provided with buffer grooves 50.

As shown in FIG. 28, the housing 10 includes a first wall part 11 and two second wall parts 12 The two second wall parts 12 are respectively located on two sides of the electrode assembly 20 in the first direction F1, and most of the expansion force of the electrode assembly 20 acts on the second wall parts 12. The first wall part 11 is located on one side of the electrode assembly 20 in a second direction F2, where the second direction F2 is perpendicular to the first direction F1, and a thickness direction of the first wall part 11 is the second direction F2. The first wall part 11 is provided with a score groove 41, where the score groove 41 may be integrally formed on the first wall part 11, and the first wall part 11 is provided with a weakened zone at the score groove 41; or the score groove 41 may be formed on the pressure relief part 40, the pressure relief part 40 is mounted on the first wall part 11, and the pressure relief part 40 is provided with a weakened zone at the score groove 41.

When the electrode assembly 20 expands, the first wall part 11 is less affected by the electrode assembly 20 than the second wall part 12 is. Since the pressure relief part 40 is located at the first wall part 11, the risk of obstruction or rupture at the pressure relief part 40 caused by the expansion of the electrode assembly 20 can be reduced.

The second wall part 12 is provided with a buffer groove 50. When the electrode assembly 20 expands, the expansion force acts on the second wall parts 12 and the first wall part 11, and the expansion stress is easily concentrated at the buffer groove 50 of the second wall part 12, such that the second wall part 12 is deformed at the buffer groove 50. Given a constant expansion force, the tensile force on the first wall part 11 can be reduced, thus reducing the probability of liquid leakage caused by tension-induced rupture at the score groove 41 of the first wall part 11, prolonging the service life of the battery cell 100, and improving the reliability of the battery cell.

As shown in FIGs. 30-35, in some embodiments, the buffer groove 50 is located at an end of the second wall part 12 proximal to the first wall part 11, the buffer groove 50 is provided with an edge proximal to the first wall part 11, and the minimum distance between the edge and an inner wall surface of the first wall part 11 is M, satisfying 0 ≤ M ≤ 5 mm, and preferably, 0 ≤ M ≤ 2 mm.

As shown in FIG. 35, the second wall part 12 is located on the first wall part 11, the lower end of the second wall part 12 is connected to the first wall part 11, the buffer groove 50 is located at the lower end of the second wall part 12, and the buffer groove 50 is provided with a lower edge proximal to the first wall part 11, where the minimum distance between the lower edge and an inner wall surface of the first wall part 11 is M.

If M is too large, that is, the distance between the lower edge of the buffer groove 50 and the inner wall surface of the first wall part 11 is too large, the buffer effect of the buffer groove 50 on the score groove 41 is too small, resulting in an unobvious buffer effect. Therefore, M may be limited between 0 mm and 5 mm, and M may be any one point value of 0 mm, 1 mm, 2 mm, 3 mm, 4 mm, and 5 mm, or a value in a range defined by any two of the point values.

Therefore, the buffer groove 50 can play a role in buffering the weakened zone to some extent, thus reducing the probability of liquid leakage caused by tension-induced rupture at the weakened zone.

In some examples, 0 ≤ M ≤ 2 mm, that is, M may be any one point value of 0, 0.1 mm, 0.2 mm, 0.3 mm, 0.4 mm, 0.5 mm, 0.6 mm, 0.7 mm, 0.8 mm, 0.9 mm, 1 mm, 1.1 mm, 1.2 mm, 1.3 mm, 1.4 mm, 1.5 mm, 1.6 mm, 1.7 mm, 1.8 mm, 1.9 mm, and 2 mm, or a value in a range defined by any two of the point values.

Therefore, the buffer groove 50 can further play a role in buffering the weakened zone to some extent, thus reducing the probability of liquid leakage caused by tension-induced rupture at the weakened zone.

As shown in FIGs. 32 and 35, in some embodiments, the maximum groove width of the buffer groove 50 in the second direction F2 is N, satisfying 3 mm ≤ N ≤ 6 mm.

As shown in FIGs. 32 and 35, when one second wall part 12 is provided with one buffer groove 50, the maximum groove width of the buffer groove 50 in the second direction F2 is N. When one second wall part 12 is provided with a plurality of buffer grooves 50, the plurality of buffer grooves 50 are located on the same side surface of the second wall part 12, and then the sum of the groove widths of the plurality of buffer grooves 50 is the maximum groove width N. When both the inner surface and the outer surface of the second wall part 12 are provided with buffer grooves 50, the maximum groove width N of the buffer groove 50 is the larger one of the maximum groove widths of the buffer grooves 50 on the respective side surfaces of the second wall part 12.

When the maximum groove width N of the buffer groove 50 is too small, the second wall part 12 has high rigidity at the buffer groove 50 and is not easy to deform. In this way, the buffer effect of the buffer groove 50 is not obvious, and the weakened zone is prone to tension-induced rupture when the electrode assembly 20 expands; when the maximum groove width N of the buffer groove 50 is too large, the strength of the second wall part 12 at the buffer groove 50 is too small, and thus the second wall part 12 is prone to rupture in scenarios such as dropping, which affects the reliability of the battery cell 100.

Thus, the maximum groove width N of the buffer groove 50 is limited between 3 mm and 6 mm, and N may be any one point value of 3 mm, 3.1 mm, 3.2 mm, 3.3 mm, 3.4 mm, 3.5 mm, 3.6 mm, 3.7 mm, 3.8 mm, 3.9 mm, 4 mm, 4.1 mm, 4.2 mm, 4.3 mm, 4.4 mm, 4.5 mm, 4.6 mm, 4.7 mm, 4.8 mm, 4.9 mm, 5 mm, 5.1 mm, 5.2 mm, 5.3 mm, 5.4 mm, 5.5 mm, 5.6 mm, 5.7 mm, 5.8 mm, 5.9 mm, and 6 mm, or a value in a range defined by any two of the point values.

By limiting the maximum groove width N of the buffer groove 50 within the above range, the buffer groove 50 can play a role in effectively buffering the score groove 41, reducing the probability of liquid leakage caused by tension-induced rupture at the joint, and meanwhile, avoiding transitional decrease in the structural strength of the second wall part 12 to some extent, and reducing the probability of rupture at the second wall part 12 during tests or use.

As shown in FIGs. 30-32, in some embodiments, the buffer groove 50 is located at an end of the second wall part 12 proximal to the first wall part 11, the buffer groove 50 is provided with an edge proximal to the first wall part 11, the minimum distance between the edge and an inner wall surface of the first wall part 11 is M, and the maximum groove width of the buffer groove 50 in the second direction F2 is N, satisfying M = 0 and 5 mm ≤ N ≤ 6 mm.

As shown in FIGs. 31 and 32, the second wall part 12 is located on the first wall part 11, the lower end of the second wall part 12 is connected to the first wall part 11, the buffer groove 50 is located at the lower end of the second wall part 12, and the buffer groove 50 is provided with a lower edge proximal to the first wall part 11, where the minimum distance M between the lower edge and the inner wall surface of the first wall part 11 is 0, that is, the lower edge of the buffer groove 50 extends to the first wall part 11, such that the lower end of the second wall part 12 forms a stress concentration point when the electrode assembly 20 expands. Therefore, the probability that the expansion force is concentrated at the position of the score groove 41 is reduced, thereby reducing the probability of liquid leakage caused by tension-induced rupture at the score groove 41, and improving the reliability of the battery cell 100.

In this case, 5 mm ≤ N ≤ 6 mm, and N may be any one point value of 5 mm, 5.1 mm, 5.2 mm, 5.3 mm, 5.4 mm, 5.5 mm, 5.6 mm, 5.7 mm, 5.8 mm, 5.9 mm, and 6 mm, or a value in a range defined by any two of the point values.

Therefore, the buffer groove 50 can play a role in effectively buffering the score groove 41, reducing the probability of liquid leakage caused by tension-induced rupture at the score groove 41, and meanwhile, avoiding transitional decrease in the structural strength of the second wall part 12 to some extent, and reducing the probability of rupture at the second wall part 12 during tests or use.

In some examples, the second wall part 12 may be formed into a flat-plate structure, in which case the thickness of the second wall part 12 is uniform at different positions. Alternatively, the second wall part 12 may include a main body zone and a partial zone. The partial zone may be provided with a groove, a protrusion, or other special structures such as a hole. For example, the partial zone is provided with an arc-shaped structure that facilitates connection to other wall parts, and the partial zone may be located around the main body zone, or may be located in the middle of the main body zone, or may be disposed in a dispersed manner. In this case, the thickness dimension of the second wall part 12 is the thickness dimension of the main body zone. The thickness dimension of the second wall part 12 is H0, where 0.4 mm ≤ H0 ≤ 2.0 mm, and preferably, 0.4 mm ≤ H0 ≤ 1.0 mm. The minimum thickness of the second wall part 12 at the buffer groove 50 is H2, where 0.5 ≤ H2/H0 ≤ 0.7.

In addition, the upper portion of the buffer groove 50 is provided with a transition zone 51, and the thickness of the transition zone 51 gradually increases from bottom to top, such that a smooth transition between the upper edge of the buffer groove 50 and the main body zone of the second wall part 12 is achieved. In the upper-lower direction, the width of the transition zone 51 is O, and 3 mm ≤ O ≤ 5 mm. Therefore, the thickness of the second wall part 12 can be prevented from decreasing sharply at the buffer groove 50, such that the rupture at the buffer groove 50 of the second wall part 12 can be avoided to some extent, and the reliability of the battery cell 100 is improved.

As shown in FIGs. 33-35, in some embodiments, the buffer groove 50 is located at an end of the second wall part 12 proximal to the first wall part 11, the buffer groove 50 is provided with an edge proximal to the first wall part 11, the minimum distance between the edge and an inner wall surface of the first wall part 11 is M, and the maximum groove width of the buffer groove 50 in the second direction F2 is N, satisfying 0 < M ≤ 2 mm and 3 mm ≤ N ≤ 4 mm.

As shown in FIGs. 34 and 35, the second wall part 12 is located on the first wall part 11, the lower end of the second wall part 12 is connected to the first wall part 11, the buffer groove 50 is located at the lower end of the second wall part 12, and the buffer groove 50 is provided with a lower edge proximal to the first wall part 11, where the lower edge is spaced apart from an inner wall surface of the first wall part 11, the minimum distance M between the lower edge and the inner wall surface of the first wall part 11 is not greater than 2 mm, and M may be any one point value of 0.1 mm, 0.2 mm, 0.3 mm, 0.4 mm, 0.5 mm, 0.6 mm, 0.7 mm, 0.8 mm, 0.9 mm, 1 mm, 1.1 mm, 1.2 mm, 1.3 mm, 1.4 mm, 1.5 mm, 1.6 mm, 1.7 mm, 1.8 mm, 1.9 mm, and 2 mm, or a value in a range defined by any two of the point values.

In this case, 3 mm ≤ N ≤ 4 mm, and N may be any one point value of 3 mm, 3.1 mm, 3.2 mm, 3.3 mm, 3.4 mm, 3.5 mm, 3.6 mm, 3.7 mm, 3.8 mm, 3.9 mm, and 4 mm, or a value in a range defined by any two of the point values.

Therefore, the buffer groove 50 can play a role in effectively buffering the score groove 41, reducing the probability of liquid leakage caused by tension-induced rupture at the score groove 41, and meanwhile, avoiding transitional decrease in the structural strength of the second wall part 12 to some extent, and reducing the probability of rupture at the second wall part 12 during tests or use.

As shown in FIGs. 30 and 33, in some embodiments, the buffer groove 50 extends along a third direction F3. In the third direction F3, the buffer groove 50 is spaced apart from the edge of the second wall part 12, and the third direction F3 is perpendicular to the first direction F1 and the second direction F2, separately.

As shown in FIGs. 30 and 33, the buffer groove 50 is disposed on the inner surface of the second wall part 12, and the buffer groove 50 extends in the left-right direction. The left and right edges of the buffer groove 50 are spaced apart from the left and right edges of the second wall part 12, respectively. In this way, the case that the end part of the buffer groove 50 extends to the adjacent wall part can be avoided to some extent, which affects the strength of the joint between the second wall part 12 and the adjacent wall part, such that the buffer groove 50 plays a role in buffering the score groove 41, and meanwhile, the structural strength of the entire housing 10 is enhanced, and the probability of rupture of the housing 10 during tests or use is avoided.

In some embodiments, the maximum length of the buffer groove 50 in the third direction F3 is less than the maximum length of the electrode assembly 20 in the third direction F3.

In the left-right direction, if the maximum length of the buffer groove 50 is too large, the dimension of the buffer groove 50 occupying the second wall part 12 is too large, which reduces the structural strength of the second wall part 12. Thus, the second wall part 12 is prone to rupture in scenarios such as dropping, thus affecting the reliability of the battery cell 100. Thus, the maximum length of the buffer groove 50 in the third direction F3 is limited within the maximum length of the electrode assembly 20 in the third direction F3, such that the buffer groove 50 plays a role in buffering the score groove 41, and meanwhile, the structural strength of the second wall part 12 is enhanced, thus avoiding the probability of rupture at the second wall part 12 during tests or use.

As shown in FIGs. 11-38, in some embodiments, the housing 10 includes the plurality of wall parts and the pressure relief part 40, where the pressure relief part 40 is provided with a score groove 41, and at least one of the wall parts is provided with a buffer groove 50.

The pressure relief part 40 is provided with a score groove 41, the pressure relief part 40 is provided with a weakened zone at the score groove 41, the pressure relief part 40 may be mounted on the wall part of the housing 10 or may be integrally formed with the wall part of the housing 10, and two sides of the pressure relief part 40 in the first direction F1 are respectively provided with buffer grooves 50.

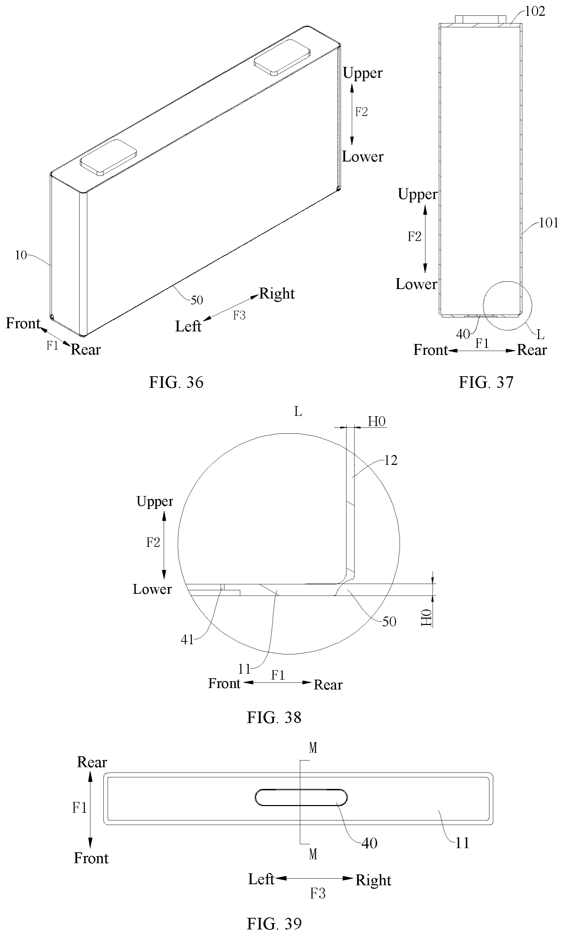

As shown in FIGs. 11-35, the buffer groove 50 is located on one wall part of the housing 10. As shown in FIGs. 36-38, FIG. 36 is a schematic diagram of a housing according to some embodiments of the present application; FIG. 37 is a cross-sectional view of the housing shown in FIG. 36; FIG. 38 is an enlarged view of the circled portion L in FIG. 37, where the two wall parts of the housing are respectively provided with the buffer grooves 50. As shown in FIG. 38, the buffer groove 50 is disposed at the joint between the first wall part 11 and the second wall part 12. Thus, when the electrode assembly 20 expands, the deformation of the housing 10 is borne by the pressure relief part 40 and the plurality of wall parts of the housing 10 together. The first wall part 11 and the second wall part 12 can generate a certain deformation at the buffer groove 50, such that the deformation of the pressure relief part 40 is reduced, thereby reducing the risk of rupture at the pressure relief part 40, and improving the reliability of the battery cell 100.

As shown in FIGs. 11-20, in some embodiments, the buffer groove 50 is disposed on an inner surface and/or an outer surface of the wall part.

As shown in FIGs. 11 and 15, one side of the score groove 41 is provided with a buffer groove 50, where the buffer groove 50 is disposed on the outer surface of the wall part. Certainly, as shown in FIG. 13, the buffer groove 50 is also disposed on the inner surface of the wall part. As shown in FIGs. 16 and 19, one side of the score groove 41 is provided with a plurality of buffer grooves 50, some of the buffer grooves 50 are disposed on the outer surface of the wall part and the other buffer grooves 50 are disposed on the inner surface of the wall part. The plurality of buffer grooves 50 may also be spaced apart on the outer surface of the wall part, and the plurality of buffer grooves 50 may also be spaced apart on the inner surface of the wall part.

Therefore, a groove can be disposed on a single surface of the wall part of the housing 10 to simplify the manufacturing process; alternatively, grooves can also be disposed on two surfaces of the wall part of the housing 20, such that the transitional decrease in the strength of the wall part of the housing 20 can be avoided to some extent, and meanwhile, the buffering effect of the buffer groove 10 on the score groove 41 can be improved, the probability of liquid leakage caused by tension-induced rupture at the score groove 41 of the pressure relief part 40 is reduced, the service life of the battery cell 100 is prolonged, and the reliability of the battery cell is improved.

As shown in FIG. 15, in some embodiments, the maximum depth of the buffer groove 50 is H1, and the thickness of the wall part of the housing 10 provided with the score groove 41 is H0, satisfying 25% ≤ H1/H0 ≤ 97.5%, further, 40% ≤ H1/H0 ≤ 80%, and preferably, 50% ≤ H1/H0 ≤ 70%.

As shown in FIG. 15, the buffer groove 50 is disposed on the first wall part 11. If H1/H0 is too large, the maximum depth H1 of the buffer groove 50 is too large, and the thickness of the first wall part 11 at the buffer groove 50 is too small, resulting in transitional decrease in the strength of the first wall part 11. Alternatively, if H0 is too small, the thickness of the first wall part 11 is too small, and thus the first wall part 11 is prone to tensile deformation.

If H1/H0 is too small, the maximum depth H1 of the buffer groove 50 is too small, or the thickness of the first wall part 11 is too large, the first wall part 11 has high rigidity at the buffer groove 50 and is not easy to deform. In this way, the buffer effect of the buffer groove 50 is not obvious, and the weakened zone is prone to tension-induced rupture when the electrode assembly 20 expands.

Therefore, H1/H0 is limited to 25% ≤ H1/H0 ≤ 97.5%, and H1/H0 may be any one point value of 25%, 30%, 40%, 50%, 60%, 70%, 80%, 90%, and 97.5%, or a value in a range defined by any two of the point values.

By defining H1/H0, when the electrode assembly 20 expands, the wall part of the housing 10 can be deformed to some extent at the buffer groove 50, such that the expansion force can be released to some extent, thereby reducing the tensile deformation at the score groove 41 of the pressure relief part 40. Therefore, the probability of liquid leakage caused by tension-induced rupture at the weakened zone is reduced, the service life of the battery cell 100 is prolonged, and the reliability of the battery cell is improved.

In some examples, 40% ≤ H1/H0 ≤ 80%, and H1/H0 may be any one point value of 40%, 45%, 50%, 55%, 60%, 65%, 70%, 75%, and 80%, or a value in a range defined by any two of the point values.

Therefore, when the electrode assembly 20 expands, the wall part of the housing 10 can be deformed at the buffer groove 50 to some extent, such that the expansion force can be released to some extent, thereby reducing the tensile deformation at the score groove 41 of the pressure relief part 40. Therefore, the probability of liquid leakage caused by tension-induced rupture at the weakened zone is reduced, the service life of the battery cell 100 is prolonged, and the reliability of the battery cell is improved.

In some examples, 50% ≤ H1/H0 ≤ 70%, and H1/H0 may be any one point value of 50%, 51%, 52%, 53%, 54%, 55%, 56%, 57%, 58%, 59%, 60%, 61%, 62%, 63%, 64%, 65%, 66%, 67%, 68%, 69%, and 70%, or a value in a range defined by any two of the point values.

Therefore, when the electrode assembly 20 expands, the wall part of the housing 10 can be deformed at the buffer groove 50 to some extent, such that the expansion force can be released to some extent, thereby reducing the tensile deformation at the score groove 41 of the pressure relief part 40. Therefore, the probability of liquid leakage caused by tension-induced rupture at the weakened zone is reduced, the service life of the battery cell 100 is prolonged, and the reliability of the battery cell is improved.

As shown in FIG. 15, in some embodiments, the thickness of the wall part of the housing 10 provided with the score groove 41 is H0, satisfying 0.4 mm ≤ H0 ≤ 2 mm.

As shown in FIG. 15, if H0 is too small, the thickness of the first wall part 11 is too small, and thus the first wall part 11 is prone to tensile deformation; if H0 is too large, the thickness of the first wall part 11 is too large, and thus the first wall part 11 has high rigidity at the buffer groove 50 and is not easy to deform. In this way, the buffer effect of the buffer groove 50 is not obvious, and the weakened zone at the score groove is prone to tension-induced rupture when the electrode assembly 20 expands.

Therefore, H0 is limited between 0.4 mm and 2 mm, and H0 may be any one point value of 0.4 mm, 0.5 mm, 0.6 mm, 0.7 mm, 0.8 mm, 0.9 mm, 1 mm, 1.1 mm, 1.2 mm, 1.3 mm, 1.4 mm, 1.5 mm, 1.6 mm, 1.7 mm, 1.8 mm, 1.9 mm, and 2 mm, or a value in a range defined by any two of the point values.

In the above technical solutions, the buffer groove 50 can play a role in effectively buffering the score groove 41, reducing the probability of liquid leakage caused by tension-induced rupture at the score groove 41, and meanwhile, avoiding transitional decrease in the structural strength of the housing 10 to some extent, and reducing the probability of rupture of the housing 10 during tests or use.

As shown in FIG. 13, one wall part of the housing 10 is provided with a buffer groove 50, and the thickness of the wall part is H0, where 0.4 mm ≤ H0 ≤ 2 mm. The thicknesses of other wall parts not provided with a buffer groove 50 may be the same as or different from the thickness of the wall part. As shown in FIG. 38, two wall parts of the housing 10 are both provided with buffer grooves 50, at this time, the thickness of one wall part is H0, satisfying 0.4 mm ≤ H0 ≤ 2 mm, and the thickness of the other wall part is H0, satisfying 0.4 mm ≤ H0 ≤ 2 mm, where the thicknesses of the two wall parts may be the same or different.

As shown in FIG. 13, in some embodiments, the minimum thickness of the housing 10 at the buffer groove 50 is H2, satisfying 0.05 mm ≤ H2 ≤ 1.5 mm.

If H2 is too large, the rigidity of the housing 10 at the buffer groove 50 is too high, and the housing 10 is not easy to deform at the buffer groove 50, such that the buffer effect of the buffer groove 50 is not obvious, and the weakened zone at the score groove 41 is prone to tension-induced rupture when the electrode assembly 20 expands; if H2 is too small, the strength of the housing 10 at the buffer groove 50 is too small, and the housing 10 is prone to rupture in scenarios such as dropping, which affects the reliability of the battery cell 100.

Thus, H2 is limited between 0.05 mm and 1.5 mm, and H2 may be any one point value of 0.05 mm, 0.1 mm, 0.2 mm, 0.3 mm, 0.4 mm, 0.5 mm, 0.6 mm, 0.7 mm, 0.8 mm, 0.9 mm, 1 mm, 1.1 mm, 1.2 mm, 1.3 mm, 1.4 mm, and 1.5 mm, or a value in a range defined by any two of the point values.

By limiting H2, the housing 10 has proper strength at the buffer groove 50, which can not only avoid the rupture of the housing 10 in scenarios such as dropping, but also can cause certain deformation when the electrode assembly 20 expands. Therefore, the acting force at the score groove 41 can be buffered, the probability of liquid leakage caused by tension-induced rupture at the weakened zone of the score groove 41 is reduced, the service life of the battery cell 100 is prolonged, and the reliability of the battery cell is improved.

As shown in FIG. 32, in some embodiments, an outer periphery of the buffer groove 50 is provided with a transition zone 51, and the thickness of the transition zone 51 gradually increases in the direction away from the center of the buffer groove 50.

As shown in FIG. 32, the lower end of the second wall part 12 is provided with a buffer groove 50, the upper portion of the buffer groove 50 is provided with a transition zone 51, and the thickness of the transition zone 51 gradually increases from bottom to top, such that a smooth transition between the upper edge of the buffer groove 50 and the main body zone of the second wall part 12 is achieved. Therefore, the thickness of the housing 10 can be prevented from suddenly decreasing at the buffer groove 50, the rupture of the housing 10 at the buffer groove 50 due to stress concentration is avoided to some extent, the reliability of the battery cell 100 is improved, and meanwhile, the buffer groove 50 can be injection molded integrally with the housing 10 through a mold, making the manufacturing and forming process of the buffer groove 50 simpler.

As shown in FIG. 32, in some embodiments, in the direction away from the center of the buffer groove 50, the width dimension of the transition zone 51 is O, satisfying 3 mm ≤ O ≤ 5 mm.

As shown in FIG. 32, the transition zone 51 is located on the buffer groove 50, and the width of the transition zone 51 in the upper-lower direction is O. If O is too large, the transition zone 51 occupies too much space, which easily affects the structural strength of the wall part. If O is too small, the transition zone 51 is too small, and the cross-section of the buffer groove 50 and the main body zone of the second wall part 12 changes abruptly, which easily causes stress concentration. The second wall part 12 is prone to rupture at the buffer groove 50, and the buffer groove 50 is not prone to mold removal during injection molding.

Therefore, O is limited between 3 mm and 5 mm, and O may be any one point value of 3 mm, 3.1 mm, 3.2 mm, 3.3 mm, 3.4 mm, 3.5 mm, 3.6 mm, 3.7 mm, 3.8 mm, 3.9 mm, 4 mm, 4.1 mm, 4.2 mm, 4.3 mm, 4.4 mm, 4.5 mm, 4.6 mm, 4.7 mm, 4.8 mm, 4.9 mm, and 5 mm, or a value in a range defined by any two of the point values.

By limiting the width of the transition zone 51, the integrated injection molding of the buffer groove 50 and the housing 10 can be facilitated, and the strength of the housing 10 can also be improved. This reduces the probability of the rupture of the housing 10 at the buffer groove 50, improves the reliability of the battery cell 100, and prolongs the service life of the battery cell.

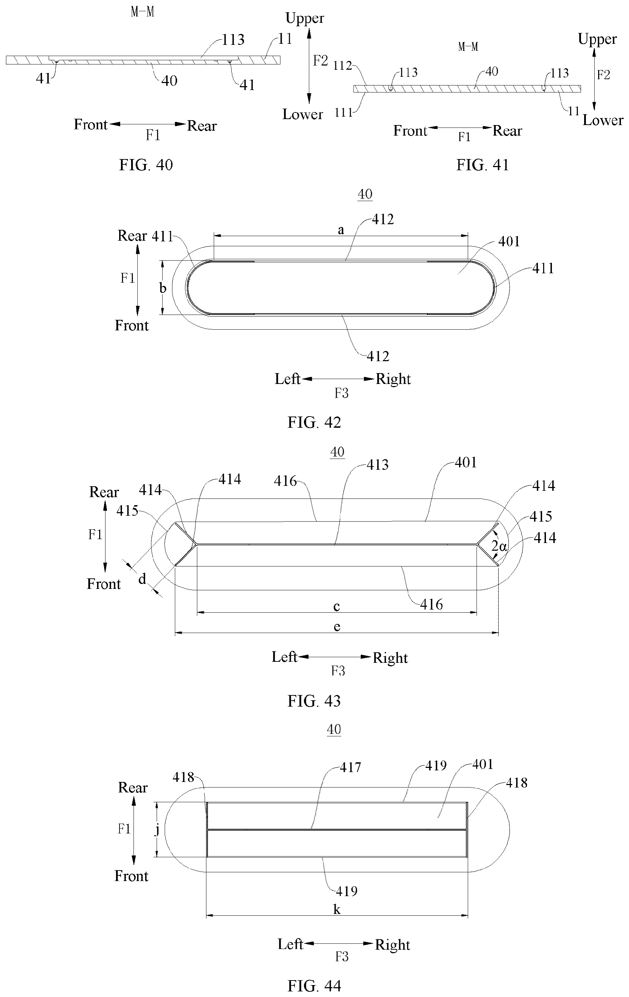

As shown in FIGs. 39-41, FIG. 39 is a schematic diagram of a first wall part according to some embodiments of the present application; FIG. 40 is a cross-sectional view along line M-M in FIG. 39 according to some embodiments; FIG. 41 is a cross-sectional view along line M-M in FIG. 39 according to some other embodiments. In some embodiments, the housing 10 includes a pressure relief part 40, the pressure relief part 40 is provided with a score groove 41, and the pressure relief part 40 is integrally formed with the wall part of the housing 10.

By allowing the pressure relief part 40 to be integrally formed with the first wall part 11, the reliability of the pressure relief part 40 can be improved, the process of connecting the pressure relief part 40 to the first wall part 11 is omitted, and the production and manufacturing cost of the battery cell 100 can be reduced.

As shown in FIGs. 40 and 41, in some embodiments, an inner surface and/or an outer surface of the first wall part 11 is provided with a groove 113, and a groove bottom wall of the groove 113 is provided with the pressure relief part 40.

As shown in FIG. 40, the inner surface of the first wall part 11 faces the interior of the housing 10, and the outer surface of the first wall part 11 faces the exterior of the housing 10. Here, the groove 113 may be formed on the inner surface of the first wall part 11, the groove 113 may not be formed on the outer surface of the first wall part 11, and the portion of the first wall part 11 located between the bottom surface of the groove 113 and the outer surface of the first wall part 11 is the groove bottom wall of the groove 113. Alternatively, the groove 113 may not be formed on the inner surface of the first wall part 11, the groove 113 may be formed on the outer surface of the first wall part 11, and the portion of the first wall part 11 located between the bottom surface of the groove 113 and the inner surface of the first wall part 11 is the groove bottom wall of the groove 113. Alternatively, the grooves 113 may be formed on both the inner surface and the outer surface of the first wall part 11, and the portion of the first wall part 11 located between the bottom surfaces of the two grooves 113 is the groove bottom wall of the groove 113. It can be understood that the groove 113 formed on the inner surface of the first wall part 11 and the groove 113 formed on the outer surface of the first wall part 11 share the same groove bottom wall.

The first wall part 11 is thinner than the first wall part 11 itself in the zone where the groove 113 is provided, and the zone is provided with a pressure relief part 40 integrally formed with the first wall part 11. The groove 113 herein may be formed in the first wall part 11 in a plurality of manners, for example, stamping, milling, laser etching, and chemical etching.

The groove 113 may be a groove of various shapes. For example, the groove 113 may be a rectangular groove, a circular groove, or an elliptical groove. The rectangular groove is a groove with a rectangular cross section, the circular groove is a groove with a circular cross section, and the elliptical groove is a groove with an elliptical cross section. The cross section referred to herein is perpendicular to the depth direction of the groove 113. At this time, the pressure relief part 40 formed on the bottom wall of the groove 113 is also generally provided with a score groove 41. When the battery cell 100 is subjected to pressure relief, the pressure relief part 40 may split along at least a portion of the score groove 41, thereby opening the predetermined pressure relief zone 401 defined by the score groove 41 to achieve rapid pressure relief.

In addition, the groove 113 may also be of other shapes, and the groove 113 is a groove extending along the trajectory of a "double-Y" shape, an "I" shape, a " 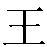 " shape (the shape of Chinese character 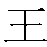 ), etc. In this case, the groove bottom of the groove 113 is provided with the pressure relief part 40, such that the pressure relief part 40 forms the above-mentioned corresponding shape, the pressure relief part 40 is provided with a weakened zone relative to the first wall part 11, and the groove 113 here may also be understood as a score groove 41. At this time, when the battery cell 100 is subjected to pressure relief, the groove bottom of the groove 113 splits, resulting in rupture at the pressure relief part 40. Therefore, the first wall part 11 may be provided with an opening at the groove bottom of the groove 113 to achieve pressure relief.

The integrated pressure relief part 40 is formed by disposing the groove 113 on the first wall part 11, which is simple to implement and low in production cost. In addition, when the outer surface of the first wall part 11 is provided with the groove 113, the groove 113 may provide an avoidance space for the pressure relief part 40 to open, thereby reducing the probability that the pressure relief part 40 cannot be opened due to being blocked by an external barrier.

As shown in FIG. 41, in some embodiments, the inner surface and/or the outer surface of the first wall part 11 is provided with the groove 113, the groove 113 extends in a circumferential direction, and a zone enclosed by the groove 113 is provided with the pressure relief part 40.

As shown in FIG. 41, the inner surface of the first wall part 11 faces the interior of the housing 10, and the outer surface of the first wall part 11 faces the exterior of the housing 10. Here, the groove 113 may be formed on the inner surface of the first wall part 11, and the groove 113 may not be formed on the outer surface of the first wall part 11. Alternatively, the groove 113 may not be formed on the inner surface of the first wall part 11, and the groove 113 may be formed on the outer surface of the first wall part 11. Alternatively, the grooves 113 may be formed on both the inner surface and the outer surface of the first wall part 11, and the portion of the first wall part 11 located between the bottom surfaces of the two grooves 113 is the groove bottom wall of the groove 113.

The groove 113 extends in a circumferential direction, and the groove 113 may form a closed ring shape. At this time, the zone enclosed by the groove 113 is provided with the pressure relief part 40, that is, the pressure relief part 40 includes the groove 113 and an inner side zone of the groove 113. The groove 113 here may also be understood as a score groove 41. When the battery cell 100 is subjected to pressure relief, the first wall part 11 may split at the groove 113, and the pressure relief part 40 may be opened with the groove 113 as a boundary, such that the pressure relief part 40 is separated from the first wall part 11, thereby achieving rapid pressure relief.

In the above technical solutions, the integrated pressure relief part 40 is formed by disposing the groove 113 on the first wall part 11, which is simple to implement and low in production cost.

As shown in FIGs. 7-10 and 21-26, in some embodiments, the housing 10 includes a pressure relief part 40, where the pressure relief part 40 is provided with a score groove 41, the pressure relief part 40 is disposed separately from the wall part of the housing 10, and the pressure relief part 40 is mounted on the wall part of the housing 10.

As shown in FIGs. 7, 21 and 23, the pressure relief part 40 and the housing 10 are two separate components, which are formed separately and then assembled together. Specifically, the pressure relief part 40 may be an anti-explosion sheet, an anti-explosion valve, a safety valve, or other components. The pressure relief part 40 may be mounted on the first wall part 11 by means of bonding, welding, etc. The first wall part 11 is provided with a through hole 111, and the pressure relief part 40 is mounted in the through hole 111. When the internal pressure of the battery cell 100 reaches the threshold value, the pressure relief part 40 opens at least a portion of the through hole 111, and the discharge medium inside the battery cell 100 is discharged through the through hole 111 to release the pressure inside the battery cell 100.

As shown in FIG. 21, taking the pressure relief part 40 being an anti-explosion sheet as an example, the anti-explosion sheet is a sheet body having the strength of at least a portion of the zone less than that of the first wall part 11, the anti-explosion sheet covers the through hole, and the anti-explosion sheet is welded to the first wall part 11. When the internal pressure of the battery cell 100 reaches the threshold value, at least a portion of the anti-explosion sheet is damaged, thereby opening at least a portion of the through hole 111 to release the pressure inside the battery cell 100.

In this embodiment, the pressure relief part 40 is a component independent of the wall part of the housing 10, and the pressure relief part 40 and the wall part of the housing 10 can be manufactured separately and then assembled, resulting in low generation difficulty and high efficiency.

As shown in FIGs. 7-38, in some embodiments, the buffer grooves 50 are symmetrically disposed along the geometric center of the housing 10.

As shown in FIG. 11, the housing 10 is provided with a central surface in the front-rear direction, and the buffer grooves 50 are symmetrically disposed along the central surface; and the housing 10 is provided with a central surface in the left-right direction, and the buffer grooves 50 are symmetrically disposed along the central surface. As shown in FIG. 11, two buffer grooves 50 are disposed on the first wall part 11, and the two buffer grooves 50 are symmetrically disposed on the front and rear sides of the score groove 41, and the respective buffer grooves 50 are symmetrically disposed relative to the center of the predetermined pressure relief zone 401.

Therefore, the housing 10 as a whole forms a symmetrical structure, which, in an aspect, facilitates the manufacture of the buffer grooves 50, and in another aspect, allows the buffer grooves 50 to play the same role in buffering the score groove 41 at all positions. Therefore, the probability of tension-reduced rupture at a portion of the score groove 41 is reduced, and the reliability of the entire battery cell 100 is improved.

In some embodiments, the buffer groove 50 is integrally formed on the housing 10.

Therefore, the manufacturing and forming process of the buffer groove 50 can be simplified, and the manufacturing process of the battery cell 100 can be simplified.

The buffer groove 50 is formed by a trenching process.

A buffer groove 50 is formed on the inner surface and/or the outer surface of the housing 10 by digging a groove on the housing 10. Herein, the groove may be dug through laser etching, chemical etching, or machining and milling. This is convenient to implement and facilitates precise control on the dimension of the buffer groove 50.

In addition, the buffer groove 50 may also be integrally stamped and formed with the housing 10 through a mold, and the buffer groove 50 may also be integrally formed with the housing 10 through 3D printing.

As shown in FIGs. 3, 4, and 27, in some embodiments, the housing 10 includes: a housing body 101 and an end cover 102, where at least one side of the housing body 101 is provided with an opening, the end cover 102 is connected to the housing body 101 and is configured to close the opening, and the score groove 41 is disposed on the housing body 101.

The housing body 101 may be a hollow structure with an opening formed at one end, or the housing body 101 may be a hollow structure with openings formed at two opposite ends. The housing body 101 may be in various shapes, such as a prismatic shape. The housing body 101 may be an aluminum shell, a steel shell, or the like.

The end cover 102 is a component that closes the opening of housing body 101 to isolate the internal environment of the battery cell 100 from the external environment. The end cover 102 and the housing body 101 together define an accommodating space for accommodating the electrode assembly 20, the electrolyte, and other components. The shape of the end cover 102 may be adapted to the shape of the housing 10. For example, the housing body 101 is a rectangular parallelepiped structure, and the end cover 102 is a rectangular plate-shaped structure adapted to the housing 10. For another example, the housing body 101 is a cylindrical structure, and the end cover 102 is a circular plate-shaped structure adapted to the housing body 101. The end cover 102 may also be made of various materials, such as copper, iron, aluminum, steel, aluminum alloy, and plastic. The end cover 102 and the housing body 101 may be made of the same or different materials.

In an embodiment in which an opening is formed at one end of the housing body 101, one end cover 102 may be correspondingly provided. In an embodiment in which openings are respectively formed at two opposite ends of the housing body 101, two end covers 102 may be correspondingly provided. The two end covers 102 respectively close the two openings of the housing body 101, and the two end covers 102 and the housing body 101 together define the accommodating space.

The housing body 101 is provided with a first wall part 11 and a second wall part 12, and the score groove 41 is disposed on the housing body 101. Specifically, the housing body 101 is provided with a pressure relief part 40, and the score groove 41 is disposed on the pressure relief part 40. The pressure relief part 40 may be integrally formed with the housing body 101, or may be disposed separately from the housing body 101. By providing the score groove 41 on the housing body 101, the structure of the end cover 102 can be simplified, and meanwhile, the distance between the predetermined pressure relief zone 401 and the main body part of the electrode assembly 20 is conveniently shortened, such that the path for the discharge medium to flow to the short predetermined pressure relief zone 401 during pressure relief can be shortened, the time for the discharge medium to reach the short predetermined pressure relief zone 401 is shortened, the timeliness of pressure relief of the battery cell 100 is improved, and thus the reliability of the battery cell 100 is effectively improved.

Referring to FIG. 27, FIG. 27 is a schematic diagram of a battery cell according to some embodiments of the present application. In some embodiments, two opposite sides of the housing body 101 are each provided with an opening, and two end covers 102 are configured to close the openings on the corresponding sides.

As shown in FIG. 27, in an embodiment in which openings are respectively formed at two opposite ends of the housing body 101, two end covers 102 may be correspondingly provided. The two end covers 102 respectively close the two openings of the housing body 101, and the two end covers 102 and the housing body 101 together define the accommodating space. The first wall part 11 is located on the housing body 101, the pressure relief part 40 is located between the two openings, and each end cover 102 may be provided with one electrical connection part 30. By providing two openings on the housing body 101, the manufacturing and forming of the housing body 101 can be facilitated, and it is also convenient for the electrode assembly 20 to lead out the tabs from both ends, thereby facilitating the separation of the two electrical connection parts 30 and reducing the risk of short circuits of the battery cell 100.

As shown in FIGs. 4 and 27, in some embodiments, the end cover 102 is provided with an electrical connection part 30. The electrical connection part 30 is electrically connected to the positive electrode plate 21, or the electrical connection part 30 is electrically connected to the negative electrode plate 22.

The electrical connection part 30 is disposed on the end cover 102. The electrical connection part 30 may be a portion of the end cover 102, and the electrical connection part 30 may also be a post terminal mounted on the end cover 102. Generally, two electrical connection parts 30 are provided. One electrical connection part 30 is electrically connected to the tab of the positive electrode plate 21, and the other electrical connection part 30 is electrically connected to the tab of the negative electrode plate 22, so as to input or output electric energy of the battery cell 100. The electrical connection part 30 may be directly connected to the tab. For example, the electrical connection part 30 is directly welded to the tab. The electrical connection part 30 may also be indirectly connected to the tab. For example, the electrical connection part 30 is indirectly connected to the tab through a current collecting member. The current collecting member may be a metal conductor, such as copper, iron, aluminum, steel, or an aluminum alloy.

The electrical connection part 30 and the pressure relief part 40 are located on different sides of the housing 10, that is, the electrical connection part 30 is located on one wall part of the housing 10, and the pressure relief part 40 is located on another wall part of the housing 10. Since the electrical connection part 30 is connected to the tab of the electrode assembly 20, and there is a certain gap between the wall part where the electrical connection part 30 is located and the main body part of the electrode assembly 20, by disposing the electrical connection part 30 and the score groove 41 on different wall parts of the housing 10, the distance between the predetermined pressure relief zone 401 and the main body part can be shortened. Therefore, when the battery cell 100 is subjected to thermal runaway, most of the discharge medium in the housing 10 can flow directly from the position of the edge of the main body part to the predetermined pressure relief zone 401, thereby shortening the path for the discharge medium to flow to the predetermined pressure relief zone 401. As such, the discharge medium can quickly flow to the predetermined pressure relief zone 401, the time for the discharge medium to reach the predetermined pressure relief area 401 is shortened, and the timeliness of pressure relief of the battery cell 100 is improved, thereby effectively improving the reliability of the battery cell 100.

As shown in FIG. 3, in some embodiments, the housing body 101 is provided with a first wall part 11, the first wall part 11 being provided with the score groove 41, and the first wall part 11 being configured to support the electrode assembly 20 and being located under the electrode assembly 20.

Therefore, the score groove 41 may be disposed at the bottom of the battery cell 100, the bottom of the battery cell 100 may be provided with an exhaust channel, and the exhaust channel may be in communication with the predetermined pressure relief zone 401, so as to discharge the high-temperature and high-pressure smoke into the exhaust channel through the predetermined pressure relief zone 401 at the bottom when the battery cell 100 is subjected to thermal runaway, and then to the outside.

Referring to FIGs. 42-44, FIG. 42 is a schematic diagram of a pressure relief part according to some embodiments of the present application; FIG. 43 is a schematic diagram of a pressure relief part according to some other embodiments of the present application; FIG. 44 is a schematic diagram of a pressure relief part according to still some other embodiments of the present application. In some embodiments, the predetermined pressure relief zone 401 is provided with a predetermined opening boundary, where the predetermined opening boundary is enclosed by the outer edge of the orthographic projection of at least a portion of the score groove 41 in the depth direction of the score groove 41; or the predetermined opening boundary is enclosed by connecting lines between a plurality of end parts of the score groove 41; or the predetermined opening boundary is enclosed by both the connecting lines between the plurality of end parts of the score groove 41 and the outer edge of the orthographic projection of at least a portion of the score groove 41 in the depth direction of the score groove 41.

In some embodiments, the pressure relief part 40 is provided with a predetermined pressure relief zone 401 and a score groove 41. The predetermined pressure relief zone 401 is provided with a predetermined opening boundary, where the predetermined opening boundary is enclosed by the outer edge of the orthographic projection of at least a portion of the score groove 41 in the second direction F2; or the predetermined opening boundary is enclosed by connecting lines between a plurality of end parts of the score groove 41; or the predetermined opening boundary is enclosed by both the connecting lines between the plurality of end parts of the score groove 41 and the outer edge of the orthographic projection of at least a portion of the score groove 41 in the second direction F2.

As shown in FIG. 42, in some embodiments, the score groove 41 includes two first circular arc segments 411 disposed opposite to each other and two first straight line segments 412 disposed in parallel with each other, two ends of each first straight line segment 412 are respectively connected to the two first circular arc segments 411, and the two first straight line segments 412 and the two first circular arc segments 411 form a closed ring-shaped structure. In the second direction F2, the outer edge of the orthographic projection of the ring-shaped structure constitutes the predetermined opening boundary of the predetermined pressure relief zone 401, that is, the predetermined opening boundary is enclosed by the outer edge of the orthographic projection of the score groove 40 in the second direction F2.

At this time, the maximum width of the predetermined pressure relief zone 401 in the first direction F1 is W1, where W1 = b; and the maximum length of the predetermined pressure relief zone 401 in the third direction F3 is L1, where L1 = a + b, where a represents the length of the first straight line segment 412, and b represents the distance between the outer sides of the two first straight line segments 412.

As shown in FIG. 43, in some embodiments, the score groove 41 includes a second straight line segment 413 and four third straight line segments 414, where two ends of the second straight line segment 413 are each connected to two third straight line segments 414 disposed at a preset included angle. In the second direction F2, between free ends of orthographic projections of two third straight line segments 414 located at the same end of the second straight line segment 413, an arc-shaped segment 415 is defined with the vertex of the preset included angle as the circle center, and between free ends of orthographic projections of two third straight line segments 414 located on the same side of the second straight line segment 413, a fourth straight line segment 416 is defined. The two arc-shaped segments 415 and the two fourth straight line segments 416 together constitute the predetermined opening boundary of the predetermined pressure relief zone 401, that is, the predetermined opening boundary is enclosed by connecting lines between a plurality of end parts of the score groove 40.

At this time, the maximum width of the predetermined pressure relief zone 401 in the first direction F1 is W1, where W1 = 2d × sinα, and the maximum length of the predetermined pressure relief zone 401 in the third direction F3 is L1, where L1 = c + 2d, where c represents the length of the second straight line segment 413, d represents the length of the third straight line segment 414, and e represents the length of the fourth straight line segment 416. The included angle between two third straight line segments 414 located at the same end of the second straight line segment 413 is 2α.

As shown in FIG. 44, in some embodiments, the score groove 41 includes a fifth straight line segment 417 and two sixth straight line segments 418. The fifth straight line segment 417 is located between the two sixth straight line segments 418, and the end parts of the fifth straight line segment 417 are respectively connected to the middle portions of the corresponding sixth straight line segments 418. Between end parts of the two sixth straight line segments 418 located on the same side of the fifth straight line segment 417, a seventh straight line segment 419 is defined. The outer edges of the orthographic projections of the seventh straight line segments 419 and the sixth straight line segments 418 in the second direction F2 constitute the predetermined opening boundary of the predetermined pressure relief zone 401, that is, the predetermined opening boundary is enclosed by both the connecting lines between a plurality of end parts of the score groove 40 and the outer edge of the orthographic projection of a portion of the score groove 40 in the second direction.

Certainly, the score groove 41 may be provided with a hinge score 419 at the seventh straight line segment 419, and thus two hinge scores 419 are correspondingly disposed. The two hinge scores 419 are located on two sides of the fifth straight line segment 417, and the arrangement of the hinge scores 419 is conducive to the pressure relief part 40 releasing the pressure along the predetermined opening boundary to ensure the effectiveness of the pressure relief area.

At this time, the maximum width of the predetermined pressure relief zone 401 in the first direction F1 is W1, where W1 = j; and the maximum length of the predetermined pressure relief zone 401 in the third direction F3 is L1, where L1 = k, where j represents the length of the sixth straight line segment 418, and k represents the length of the seventh straight line segment 419.

By adopting the score groove 41 of the above structure, it is beneficial to rapid pressure relief of the pressure relief part 40.

The battery 1000 according to the embodiments of the second aspect of the present application includes the battery cell 100 according to the embodiments of the first aspect of the present application.

The electric device according to the embodiments of the third aspect of the present application includes the battery 1000 according to the embodiments of the second aspect of the present application, where the battery 1000 is configured to provide electric energy for the electric device. Thus, using the battery 1000 described above is beneficial for improving the use safety and reliability of the electric device.

Optionally, as shown in FIG. 1, when the battery 1000 is used in a vehicle, the battery 1000 may be disposed at the bottom, the head, or the tail of the vehicle. The battery 1000 may be configured to supply power to the vehicle. For example, the battery 1000 may serve as an operation power source for the vehicle. The vehicle may further include a controller and a motor. The controller is configured to control the battery 1000 to supply power to the motor, e.g., for operation power needed for starting, navigating, and driving of the vehicle.

A battery 1000 according to a specific embodiment of the present application and a vehicle 2000 having the same will be described below with reference to the drawings.

As shown in FIG. 1, the battery 1000 is disposed at the bottom of the vehicle 2000; as shown in FIG. 2, the battery 1000 includes a plurality of battery cells 100; as shown in FIGs. 3 and 4, each battery cell 100 includes a housing 10 and an electrode assembly 20.

The electrode assembly 20 is disposed in the housing 10. The electrode assembly 20 includes at least one positive electrode plate 21 and at least one negative electrode plate 22, where the at least one positive electrode plate 21 and the at least one negative electrode plate 22 are stacked to form a straight zone 23, and at least a portion of the positive electrode plate 21 and at least a portion of the negative electrode plate 22 are stacked in the straight zone 23 in a first direction F1.

As shown in FIGs. 3 and 4, the housing 10 may be approximately in the shape of a quadrangular prism, and it has a simple structure and is easy to form. The housing 10 is provided with electrical connection parts 30 and a pressure relief part 40. The housing 10 includes a housing body 101 and an end cover 102. The electrical connection parts 30 are disposed on the end cover 102. The housing body 101 is provided with a first wall part 11 and two oppositely disposed second wall parts 12. The pressure relief part 40 is disposed on the first wall part 11, the pressure relief part 40 is provided with a score groove 41, and the score groove 41 defines a predetermined pressure relief zone 401 that is opened when the battery cell 100 is subjected to pressure relief.

Therefore, the electrical connection parts 30 and the pressure relief part 40 are located on different sides of the housing 10, such that the distance between the pressure relief part 40 and the main body part of the electrode assembly 20 can be shortened. As such, when the battery cell 100 is subjected to thermal runaway, most of the discharge medium in the housing 10 can directly flow from the position of the edge of the main body part of the electrode assembly 20 to the pressure relief part 40, thereby shortening the path for the discharge medium to flow to the pressure relief part 40. Therefore, the discharge medium can quickly flow to the pressure relief part 40, the time for the discharge medium to reach the pressure relief part 40 is shortened, and the timeliness of pressure relief of the battery cell 100 is improved, thereby effectively improving the reliability of the battery cell 100.

As shown in FIG. 11, the first wall part 11 is provided with two buffer grooves 50, and the two buffer grooves 50 are respectively located on the front and rear sides of the score groove 41, where the maximum width of the predetermined pressure relief zone 401 in the first direction F1 is W1, and the maximum groove width of each buffer groove 50 in the first direction F1 is W2, satisfying 0.3 ≤ W2/W1 ≤ 1.

The thickness of the straight zone 23 in the first direction F1 is WO, satisfying 0.1 ≤ W2/WO ≤ 0.3.

The maximum length of the predetermined pressure relief zone 401 in the third direction F3 is L1, and the maximum groove length of each buffer groove 50 in the third direction F3 is L2, satisfying L2/L1 ≥ 1.

As shown in FIG. 15, the maximum depth of the buffer groove 50 is H1, and the thickness of the first wall part 11 is H0, satisfying 25% ≤ H1/H0 ≤ 97.5%; the thickness H0 of the first wall part 11 satisfies 0.4 mm ≤ H0 ≤ 2 mm.

Therefore, by providing the buffer groove 50 on the outer side of the score groove 41, the housing 10 can be deformed at the buffer groove 50 to some extent when the electrode assembly 20 expands, such that the expansion force of the electrode assembly 20 can be released at the buffer groove 50 to some extent to reduce the acting force transmitted to the score groove 41. Therefore, the degree of deformation of the housing 10 at the score groove 41 is reduced, the probability of liquid leakage of the housing 10 caused by tension-induced rupture at the score groove 41 is reduced, the service life of the battery cell 100 is prolonged, and the reliability of the battery cell is improved.

Finally, it should be noted that the above embodiments are only used to illustrate the technical solutions of the present application, rather than limit same. Although the present application has been described in detail with reference to the foregoing embodiments, those of ordinary skill in the art should understand that modifications can still be made to the technical solutions recorded in the foregoing embodiments, or equivalent substitutions to some or all of the technical features can be made. However, such modifications or substitutions do not make the spirit of the corresponding technical solutions deviate from the scope of the technical solutions in the embodiments of the present application, and shall all fall within the scope of claims and specification of the present application. In particular, the technical features mentioned in the embodiments can be combined in any manner, provided that there is no structural conflict. The present application is not limited to the specific embodiments disclosed herein, but encompasses all technical solutions falling within the scope of the claims.

## Claims

1. A battery cell, comprising:
an electrode assembly;
a housing, wherein the housing is configured to accommodate the electrode assembly, and the housing is provided with a score groove and a buffer groove, the score groove defining a predetermined pressure relief zone opened when the battery cell is subjected to pressure relief, and the buffer groove being located on a side of the score groove distal to a geometric center of the predetermined pressure relief zone.

2. The battery cell according to claim 1, wherein the score groove and the buffer groove are located on a same side wall of the housing, and the buffer groove is disposed relative to an edge of the score groove proximal to the housing.

3. The battery cell according to claim 2, wherein the housing comprises a pressure relief part, the pressure relief part being disposed separately from a wall part of the housing, and the pressure relief part being provided with the score groove;
the buffer groove is disposed on the pressure relief part and located on the side of the score groove distal to the geometric center of the predetermined pressure relief zone, and a thickness of the pressure relief part at the buffer groove is greater than a thickness of the pressure relief part at the score groove.

4. The battery cell according to claim 2, wherein the electrode assembly comprises at least one positive electrode plate and at least one negative electrode plate, wherein the at least one positive electrode plate and the at least one negative electrode plate are stacked to form a straight zone, and at least a portion of the positive electrode plate and at least a portion of the negative electrode plate are disposed in a stacked manner in the straight zone in a first direction;
the housing comprises a first wall part, the first wall part being located on a side of the electrode assembly in a second direction, the second direction being a thickness direction of the first wall part and being perpendicular to the first direction, and the first wall part being provided with the score groove and the buffer groove.

5. The battery cell according to claim 4, wherein the buffer groove comprises a first buffer groove part, the first buffer groove part being located on a side of the score groove in the first direction.

6. The battery cell according to claim 5, wherein a maximum width of the predetermined pressure relief zone in the first direction is W1, and a maximum groove width of the first buffer groove part in the first direction is W2, satisfying 0.3 ≤ W2/W1 ≤ 1.

7. The battery cell according to claim 5, wherein a maximum length of the predetermined pressure relief zone in a third direction is L1, and a maximum groove length of the first buffer groove part in the third direction is L2, satisfying L2/L1 ≥ 1, and the third direction is perpendicular to the first direction and the second direction, separately.

8. The battery cell according to claim 5, wherein a thickness of the straight zone in the first direction is W0, and a maximum groove width of the first buffer groove part in the first direction is W2, satisfying 0.1 ≤ W2/W0 ≤ 0.3.

9. The battery cell according to any one of claims 4 to 8, wherein the buffer groove comprises a second buffer groove part, the second buffer groove part being located on a side of the score groove in the third direction, and the third direction being perpendicular to the first direction and the second direction, separately.

10. The battery cell according to any one of claims 4 to 9, wherein the housing comprises a pressure relief part, the pressure relief part being provided with the score groove, the pressure relief part being disposed separately from the first wall part, the pressure relief part being mounted on the first wall part, and the buffer groove being located in the first wall part.

11. The battery cell according to claim 10, wherein the pressure relief part has a length direction, a maximum dimension of the pressure relief part in the length direction is L0, at least a portion of the buffer groove extends in the length direction, and a maximum groove length of the buffer groove in the length direction is L2, wherein -30 mm ≤ L2-L0 ≤ 30 mm.

12. The battery cell according to claim 10, wherein a minimum distance between an edge of the buffer groove proximal to the pressure relief part and an edge of the pressure relief part is W, satisfying 0.2 mm ≤ W ≤ 25 mm.

13. The battery cell according to claim 1, wherein the score groove and the buffer groove are located on different side walls of the housing.

14. The battery cell according to claim 13, wherein the electrode assembly comprises at least one positive electrode plate and at least one negative electrode plate, wherein the at least one positive electrode plate and the at least one negative electrode plate are stacked to form a straight zone, and at least a portion of the positive electrode plate and at least a portion of the negative electrode plate are disposed in a stacked manner in the straight zone in a first direction;
the housing comprises a first wall part and two second wall parts connected to the first wall part, wherein the two second wall parts are respectively located on two sides of the electrode assembly in the first direction, the first wall part is located on one side of the electrode assembly in a second direction, the second direction being a thickness direction of the first wall part and being perpendicular to the first direction, the first wall part is provided with the score groove, and the second wall part is provided with the buffer groove.

15. The battery cell according to claim 14, wherein the buffer groove is located at an end of the second wall part proximal to the first wall part, the buffer groove is provided with an edge proximal to the first wall part, and a minimum distance between the edge and an inner wall surface of the first wall part is M, satisfying 0 ≤ M ≤ 5 mm, and preferably, 0 ≤ M ≤ 2 mm.

16. The battery cell according to claim 14, wherein a maximum groove width of the buffer groove in the second direction is N, satisfying 3 mm ≤ N ≤ 6 mm.

17. The battery cell according to claim 14, wherein the buffer groove is located at an end of the second wall part proximal to the first wall part, the buffer groove is provided with an edge proximal to the first wall part, a minimum distance between the edge and an inner wall surface of the first wall part is M, and a maximum groove width of the buffer groove in the second direction is N, satisfying M = 0 and 5 mm ≤ N ≤ 6 mm.

18. The battery cell according to claim 14, wherein the buffer groove is located at an end of the second wall part proximal to the first wall part, the buffer groove is provided with an edge proximal to the first wall part, a minimum distance between the edge and an inner wall surface of the first wall part is M, and a maximum groove width of the buffer groove in the second direction is N, satisfying 0 < M ≤ 2 mm and 3 mm ≤ N ≤ 4 mm.

19. The battery cell according to claim 14, wherein the buffer groove extends in a third direction, and in the third direction, the buffer groove is disposed spaced apart from an edge of the second wall part, the third direction being perpendicular to the first direction and the second direction, separately.

20. The battery cell according to claim 19, wherein a maximum length of the buffer groove in the third direction is less than a maximum length of the electrode assembly in the third direction.

21. The battery cell according to any one of claims 1, and 4 to 20, wherein the housing comprises the plurality of wall parts and the pressure relief part, the pressure relief part being provided with the score groove, and at least one of the wall parts being provided with the buffer groove.

22. The battery cell according to claim 21, wherein the buffer groove is disposed on an inner surface and/or an outer surface of the wall part.

23. The battery cell according to claim 21, wherein a maximum depth of the buffer groove is H1, and a thickness of the wall part of the housing provided with the score groove is H0, satisfying 25% ≤ H1/H0 ≤ 97.5%, further, 40% ≤ H1/H0 ≤ 80%, and preferably, 50% ≤ H1/H0 ≤ 70%.

24. The battery cell according to claim 21, wherein a thickness of the wall part of the housing provided with the score groove is H0, satisfying 0.4 mm ≤ H0 ≤ 2 mm.

25. The battery cell according to claim 21, wherein a minimum thickness of the housing at the buffer groove is H2, satisfying 0.05 mm ≤ H2 ≤ 1.5 mm.

26. The battery cell according to claim 21, wherein an outer periphery of the buffer groove is provided with a transition zone, and a thickness of the transition zone gradually increases in a direction away from a center of the buffer groove.

27. The battery cell according to claim 26, wherein a width dimension of the transition zone is O in the direction away from the center of the buffer groove, satisfying 3 mm ≤ O ≤ 5 mm.

28. The battery cell according to any one of claims 1 to 2, 4 to 9, and 13 to 27, wherein the housing comprises the pressure relief part, the pressure relief part being provided with the score groove, and the pressure relief part being integrally formed with the wall part of the housing.

29. The battery cell according to any one of claims 1 to 27, wherein the housing comprises the pressure relief part, the pressure relief part being provided with the score groove, the pressure relief part being disposed separately from the wall part of the housing, and the pressure relief part being mounted on the wall part of the housing.

30. The battery cell according to any one of claims 1 to 29, wherein the buffer grooves are symmetrically disposed along a geometric center of the housing.

31. The battery cell according to any one of claims 1 to 30, wherein the buffer grooves are integrally formed on the housing.

32. The battery cell according to claim 31, wherein the buffer groove is formed by a trenching process.

33. The battery cell according to any one of claims 1 to 32, wherein
the housing comprises a housing body and end covers, at least a side of the housing body being provided with an opening, each end cover being connected to the housing body and being configured to close the corresponding opening, and the score groove being disposed on the housing.

34. The battery cell according to claim 33, wherein the openings are disposed on two opposite sides of the housing body, and the two end covers are configured to close the openings on the corresponding sides.

35. The battery cell according to claim 33 or 34, wherein the end cover is provided with an electrical connection part, the electrical connection part being electrically connected to the positive electrode plate of the electrode assembly, or the electrical connection part being electrically connected to the negative electrode plate of the electrode assembly.

36. The battery cell according to any one of claims 33 to 35, wherein the housing body is provided with the first wall part, the first wall part being provided with the score groove, and the first wall part being configured to support the electrode assembly and being located under the electrode assembly.

37. The battery cell according to any one of claims 1 to 36, wherein the predetermined pressure relief zone is provided with a predetermined opening boundary, wherein the predetermined opening boundary is enclosed by an outer edge of an orthographic projection of at least a portion of the score groove in a depth direction of the score groove; or the predetermined opening boundary is enclosed by connecting lines between a plurality of end parts of the score groove; or the predetermined opening boundary is enclosed by both the connecting lines between the plurality of end parts of the score groove and the outer edge of the orthographic projection of the at least a portion of the score groove in the depth direction of the score groove.

38. A battery, comprising the battery cell according to any one of claims 1 to 37.

39. An electric device, comprising the battery according to claim 38, the battery being configured to supply electric energy to the electric device.
